# EUROPEAN PATENT APPLICATION

(11) **EP 4 509 830 A1**
(43) Date of publication of application: **19.02.2025**
(21) Application number: 24194888.4
(22) Date of filing: 16.08.2024
(51) Int. Cl.: G01N 30/72, G05B 23/02, G06N 20/00, G06Q 10/20, H01J 49/00, H01J 49/02

(54) **INTELLIGENT MAINTENANCE FOR SCIENTIFIC INSTRUMENTS**

(30) Priority: 18.08.2023 US 202318452308
(71) Applicant: Thermo Finnigan LLC, San Jose, CA 95134 (US)
(72) Inventor: SHINHOLT, Deven Lee, Leader (US)
(74) Representative: Boult Wade Tennant LLP

(57) **Abstract**

Systems or techniques are provided for facilitating intelligent maintenance for scientific instruments. In various embodiments, a scientific instrument can comprise a chromatograph-equipped mass spectrometer. In various aspects, the scientific instrument can determine, based on an electronic counter or readback sensor associated with the chromatograph-equipped mass spectrometer failing to satisfy a threshold, whether performance of a maintenance task on the chromatograph-equipped mass spectrometer is warranted. In various instances, the scientific instrument can schedule, in response to a determination that the performance of the maintenance task is warranted, a time or date for the performance of the maintenance task, wherein the time or date can be predicted by a machine learning model based on an operational history of the chromatograph-equipped mass spectrometer. In various cases, the scientific instrument can prepare for the performance of the maintenance task, by adjusting, prior to the time or date, actuatable hardware of the chromatograph-equipped mass spectrometer.

## Description

### BACKGROUND

Scientific instruments can comprise complex arrangements of actuatable parts, sensors, or consumables. Gradual or sudden degradation of any portion of such complex arrangements can occur throughout the useful lives of scientific instruments, which can be undesirable.

### SUMMARY

The following presents a summary to provide a basic understanding of one or more embodiments. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate intelligent maintenance for scientific instruments are described.

According to one or more embodiments, a scientific instrument is provided. The scientific instrument can comprise a chromatograph-equipped mass spectrometer. The scientific instrument can further comprise a non-transitory computer-readable memory that can store computer-executable components. The scientific instrument can further comprise a processor that can be operably coupled to the non-transitory computer-readable memory and that can execute the computer-executable components stored in the non-transitory computer-readable memory. In various embodiments, the computer-executable components can comprise a determination component that can determine, based on an electronic counter or readback sensor associated with the chromatograph-equipped mass spectrometer failing to satisfy a threshold, whether performance of a maintenance task on the chromatograph-equipped mass spectrometer is warranted. In various aspects, the computer-executable components can comprise a scheduling component that can schedule, in response to a determination that the performance of the maintenance task is warranted, a time or date for the performance of the maintenance task, wherein the time or date can be predicted by a machine learning model based on an operational history of the chromatograph-equipped mass spectrometer.

According to one or more embodiments, a computer-implemented method is provided. In various embodiments, the computer-implemented method can comprise scheduling, by a scientific instrument comprising a chromatograph-equipped mass spectrometer, a time or date for performance of a maintenance task on the chromatograph-equipped mass spectrometer. In various aspects, the computer-implemented method can comprise identifying, by the scientific instrument, a hardware actuator of the chromatograph-equipped mass spectrometer that is associated with the maintenance task. In various instances, the computer-implemented method can comprise adjusting, by the scientific instrument and in response to there being less than a threshold amount of time remaining until the time or date occurs, the hardware actuator in preparation for the maintenance task.

According to one or more embodiments, a computer program product for facilitating intelligent maintenance for scientific instruments is provided. In various embodiments, the computer program product can comprise a non-transitory computer-readable memory having program instructions embodied therewith. In various aspects, the program instructions can be executable by a processor to cause the processor to predict, via execution of a machine learning model on a log of graphical user interface interactions experienced by a mass spectrometer, a time or date for performance of a maintenance task on the mass spectrometer. In various instances, the program instructions can be further executable to cause the processor to prepare, in response to there being less than a threshold amount of time remaining until the time or date occurs, the mass spectrometer for the maintenance task, by altering an interior temperature, a fluid flow rate, or an electric voltage of the mass spectrometer.

### DESCRIPTION OF THE DRAWINGS

Various embodiments will be readily understood by the following detailed description in conjunction with the accompanying figures. To facilitate this description, like reference numerals designate like structural elements. Embodiments are illustrated by way of example, not by way of limitation, in the figures. The figures are not necessarily drawn to scale.
FIG. 1 illustrates an example, non-limiting block diagram of a scientific instrument module in accordance with various embodiments described herein.
FIG. 2 illustrates an example, non-limiting flow diagram of a computer-implemented method in accordance with various embodiments described herein.
FIG. 3 illustrates a block diagram of an example, non-limiting scientific instrument that facilitates intelligent maintenance in accordance with one or more embodiments described herein.
FIG. 4 illustrates a block diagram of an example, non-limiting scientific instrument including a maintenance mapping and a maintenance task that facilitates intelligent maintenance in accordance with one or more embodiments described herein.
FIG. 5 illustrates an example, non-limiting block diagram of a maintenance mapping in accordance with one or more embodiments described herein.
FIG. 6 illustrates a block diagram of an example, non-limiting scientific instrument including a maintenance time or date predicted by a machine learning model that facilitates intelligent maintenance in accordance with one or more embodiments described herein.
FIGs. 7-8 illustrate example, non-limiting block diagrams showing how a machine learning model can predict a maintenance time or date in accordance with one or more embodiments described herein.
FIG. 9 illustrates an example, non-limiting block diagram of a training dataset in accordance with one or more embodiments described herein.
FIG. 10 illustrates an example, non-limiting block diagram showing how a machine learning model can be trained in accordance with one or more embodiments described herein.
FIG. 11 illustrates a block diagram of an example, non-limiting scientific instrument including hardware adjustments that facilitates intelligent maintenance in accordance with one or more embodiments described herein.
FIG. 12 illustrates an example, non-limiting block diagram showing how hardware adjustments can be carried out in preparation for maintenance in accordance with one or more embodiments described herein.
FIG. 13 illustrates a block diagram of an example, non-limiting scientific instrument including an assistance component that facilitates intelligent maintenance in accordance with one or more embodiments described herein.
FIGs. 14-16 illustrate flow diagrams of an example, non-limiting computer-implemented method that facilitates intelligent maintenance in accordance with one or more embodiments described herein.
FIG. 17 illustrates an example, non-limiting block diagram of a graphical user interface that can be used in the performance of some or all of the methods or techniques disclosed herein, in accordance with various embodiments described herein.
FIG. 18 illustrates an example, non-limiting block diagram of a computing device that can perform some or all of the methods or techniques disclosed herein, in accordance with various embodiments described herein.
FIG. 19 illustrates an example, non-limiting block diagram of a scientific instrument support system in which some or all of the methods or techniques disclosed herein may be performed, in accordance with various embodiments described herein.
FIG. 20 illustrates a block diagram of an example, non-limiting operating environment in which one or more embodiments described herein can be facilitated.
FIG. 21 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Various operations can be described as multiple discrete actions or operations in turn, in a manner that is most helpful in understanding the subject matter disclosed herein. However, the order of description should not be construed as to imply that these operations are necessarily order dependent. In particular, these operations can be performed in an order different from the order of presentation. Operations described can be performed in a different order from the described embodiments. Various additional operations can be performed, or described operations can be omitted in additional embodiments.

Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices. As used herein, the phrase "based on" should be understood to mean "based at least in part on," unless otherwise specified.

A scientific instrument can be any suitable computerized device that can capture electronic measurements in a scientific, laboratory, research, or clinical operational context or setting. As a non-limiting example, a scientific instrument can be a mass spectrometer coupled to a chromatograph, which can aid in determining the chemical composition or make-up of unknown samples. As another non-limiting example, a scientific instrument can be a scanning electron microscope, which can aid in determining the surface topography of microscopic or nanoscopic samples.

In any case, a scientific instrument can comprise a complex arrangement of actuatable parts (e.g., ion sources, ion lenses, heaters, coolers, fluid valves, fluid pumps, circuit switches), sensors (e.g., ion detectors, voltmeters, thermistors, potentiometers, pressure gauges), or consumables (e.g., carrier fluids, calibrants, filters). Gradual or sudden degradation of any portion of such complex arrangement can occur throughout a useful life of the scientific instrument (e.g., as the scientific instrument experiences wear and tear). Such degradation can adversely affect how accurately or reliably the scientific instrument is able to analyze samples, which can be considered as undesirable.

Accordingly, systems or techniques that can ameliorate such degradation can be considered as desirable.

Various embodiments described herein can address such degradation. One or more embodiments described herein can include systems, computer-implemented methods, apparatus, or computer program products that can facilitate intelligent maintenance for scientific instruments.

In particular, a scientific instrument can be able to determine, via any embedded counters or sensors, whether or not its constituent hardware is functioning healthily, within defined tolerances, or otherwise as expected. If the scientific instrument determines that one or more pieces of its constituent hardware are not operating properly, the scientific instrument can provide to a user or technician a notification or warning indicating that maintenance of the scientific instrument is warranted. Based on reading or viewing such notification, the user or technician can accordingly perform a maintenance task on the scientific instrument.

However, as the inventors of various embodiments described herein recognized, existing techniques experience various disadvantages regarding scheduling of maintenance tasks. In particular, when existing techniques are implemented, the scientific instrument notifies the user or technician that maintenance is warranted, and the user or technician manually performs an appropriate maintenance task on the scientific instrument at whatever time or date that the user or technician desires. It would be beneficial if the user or technician were to immediately perform the maintenance task upon becoming aware that maintenance is warranted. But the workload of the user or technician can render such immediate maintenance impracticable or infeasible. Instead, upon becoming aware that maintenance is warranted, the user or technician often manually schedules some future time or date at which to manually perform the maintenance task. Because existing techniques rely upon manual scheduling of maintenance tasks, such existing techniques are vulnerable to excessive delaying, or outright skipping, of maintenance tasks (e.g., the user or technician can schedule a time or date that is too far into the future for a given maintenance task; the user or technician can completely forget or deliberately choose not to schedule a time or date at all for a given maintenance task). Accordingly, when existing techniques are implemented, the scientific instrument can be considered as being more likely to experience degradation or damage that goes unaddressed or unrepaired.

Various embodiments described herein can ameliorate this technical problem via intelligent maintenance of scientific instruments. In particular, various embodiments described herein can involve a scientific instrument determining whether or not performance of a particular maintenance task is warranted. In response to determining that the particular maintenance task is warranted, the scientific instrument can predict a future time or date that would be suitable, appropriate, or otherwise convenient for performance of the particular maintenance task. As described herein, the scientific instrument can, in various instances, facilitate such determination via machine learning based on an operational history of the scientific instrument or based on any other suitable information pertaining to the particular maintenance task. In this way, the particular maintenance task can be automatically scheduled for that predicted time or date, without relying upon manual prompting by the user or technician (e.g., this can address situations in which the user or technicians forgets, chooses not, or otherwise fails to manually schedule the particular maintenance task). Furthermore, in various cases, the scientific instrument can, shortly prior to the predicted time or date, automatically perform any suitable hardware adjustments (e.g., temperature adjustments, fluid flow adjustments, electric power adjustments), so as to prepare itself for performance of the maintenance task. In this way, time and effort of the user or technician can be saved (e.g., the time or effort of the user or technician can be spent on actually performing the particular maintenance task at the predicted time or date rather than on preparing the scientific instrument for such performance).

Accordingly, various embodiments described herein can be considered as enabling scientific instruments to automatically perform scheduling of and preparation for maintenance. Such embodiments can therefore be considered as improving, deepening, or otherwise enhancing the intelligent or smart capabilities of scientific instruments.

Various embodiments described herein can be considered as a computerized tool (e.g., any suitable combination of computer-executable hardware or computer-executable software) that can be electronically installed on or otherwise with respect to a scientific instrument and that can facilitate intelligent maintenance for the scientific instrument. In various aspects, such computerized tool can comprise an access component, a determination component, a scheduling component, or a preparation component.

In some embodiments, the scientific instrument can comprise a chromatograph-equipped mass spectrometer. That is, the scientific instrument can comprise a mass spectrometer coupled to a chromatograph. In various aspects, the mass spectrometer can comprise any suitable constituent hardware. As some non-limiting examples, the mass spectrometer can comprise any suitable ion beam emitter (e.g., electron ionizer, chemical ionizer, matrix assisted laser desorption ionizer, electrospray ionizer, atmospheric pressure photoionizer, inductively coupled plasma ionizer), any suitable mass analyzer (e.g., quadrupole mass analyzer, ion trap mass analyzer, time-of-flight mass analyzer, sector mass analyzer), any suitable ion detector (e.g., electron multiplier detector, microchannel plate detector, image charge detector, Faraday cup detector), or any suitable ion optics equipment (e.g., ion focusing lenses, ion guides, ion deflectors). Likewise, in various instances, the chromatograph can comprise any suitable constituent hardware (e.g., gas chromatography hardware, liquid chromatography hardware, ion chromatography hardware). As some non-limiting examples, the chromatograph can comprise any suitable sample injector (e.g., injection syringe, infusion syringe, vaporizer, nebulizer), any suitable chromatograph column (e.g., comprising any suitable absorbent packing material or stationary phase film), any suitable column oven or heater, or any suitable carrier fluid flow devices (e.g., fluid valves, fluid pumps). In various cases, when given any sample, the sample can be injected into the chromatograph, the sample can be separated into various compositional components by the chromatograph, and those various compositional components can be ionized and subsequently analyzed by the mass spectrometer (e.g., the mass spectrometer can record relative abundances of sample ions as a function of mass-to-charge ratio).

In various embodiments, the access component of the computerized tool can electronically access the chromatograph-equipped mass spectrometer. That is, the access component can electronically interface or communicate with the chromatograph-equipped mass spectrometer, such that other components of the computerized tool can electronically interact with (e.g., send electronic commands to, read electronic signals from) the chromatograph-equipped mass spectrometer.

In various embodiments, the determination component of the computerized tool can electronically determine whether or not performance of a maintenance task on the chromatograph-equipped mass spectrometer is warranted. In various aspects, the determination component can facilitate this determination by implementing status awareness.

As a non-limiting example, the chromatograph-equipped mass spectrometer can have one or more electronic counters or one or more readback sensors embedded within it. In various aspects, an electronic counter can be any suitable electronic device or logic that can count, tally, or otherwise keep track of any suitable quantity, such as the total or accumulated number of occurrences of a defined event pertaining to the scientific instrument with respect to some reference (e.g., a counter can count or tally the total number of samples that the chromatograph-equipped mass spectrometer has analyzed since the chromatograph-equipped mass spectrometer was most recently serviced; a counter can count or tally the total number of injections that have been performed by an injector of the chromatograph-equipped mass spectrometer since a liner of the injector was most recently changed). In various instances, a readback sensor can be any suitable electronic device that can sense, measure, or otherwise produce an electronic output signal in response to any suitable physical stimuli (e.g., a temperature sensor, a voltage sensor, a pressure sensor, a moisture sensor, a chemical sensor, an ion detector). In any case, the determination component can record whatever data is currently or presently being indicated by the electronic counters or by the readback sensors, and such recorded data can be considered as representing the current or present-time health status of the chromatograph-equipped mass spectrometer. In various aspects, the determination component can compare such current or present-time health status to any suitable thresholds. If the current or present-time health status satisfies those thresholds, the determination component can conclude that no maintenance task is currently or presently warranted for the chromatograph-equipped mass spectrometer. In contrast, if the current or present-time health status fails to satisfy any of those thresholds, the determination component can conclude that a respective maintenance task is currently or presently warranted for the chromatograph-equipped mass spectrometer.

In various embodiments, the scheduling component of the computerized tool can, in response to a determination that the maintenance task is warranted, electronically predict a future time or date that would be suitable for performance of the maintenance task on the chromatograph-equipped mass spectrometer. In various aspects, the scheduling component can facilitate such prediction via machine learning based on an operational history of the chromatograph-equipped mass spectrometer and based on any suitable metadata pertaining to the maintenance task.

In various aspects, the operational history can be any suitable electronic data that represents, indicates, or otherwise conveys any suitable information regarding when the chromatograph-equipped mass spectrometer was operated in the past. As a non-limiting example, the operational history can, in various instances, comprise a runtime log corresponding to the chromatograph-equipped mass spectrometer. In various cases, the runtime log can be an electronic record that indicates past times or dates on which, at which, or during which the chromatograph-equipped mass spectrometer was conducting, running, or otherwise analyzing samples. As another non-limiting example, the operational history can, in various instances, comprise a graphical user interface (GUI) interaction log corresponding to the chromatograph-equipped mass spectrometer. In various cases, the GUI interaction log can be an electronic record that indicates past times or dates on which, at which, or during which a GUI of the chromatograph-equipped mass spectrometer was interacted with (e.g., was clicked) by a user or technician. Note that whatever times or dates are indicated in the operational history can be specified at any suitable level of granularity (e.g., year, month, week, day, hour, minute, or second).

In various aspects, the metadata can be any suitable electronic data that represents, indicates, or otherwise conveys any suitable properties, characteristics, or attributes of the maintenance task. As a non-limiting example, the metadata can include a task duration. In various instances, the task duration can be any suitable electronical data that indicates how long performance of the maintenance task is expected to take. As another non-limiting example, the metadata can include a task priority level. In various cases, the task priority level can be any suitable electronic data that indicates how important or how critical the maintenance task is to the scientific instrument.

In various aspects, the scheduling component can store, maintain, control, or otherwise access a machine learning model. In various instances, the machine learning model can exhibit any suitable internal architecture, such as a deep learning neural network internal architecture. For example, the machine learning model can include any suitable numbers of any suitable types of layers (e.g., input layer, one or more hidden layers, output layer, any of which can be convolutional layers, dense layers, non-linearity layers, pooling layers, batch normalization layers, or padding layers). As another example, the machine learning model can include any suitable numbers of neurons in various layers (e.g., different layers can have the same or different numbers of neurons as each other). As yet another example, the machine learning model can include any suitable activation functions (e.g., softmax, sigmoid, hyperbolic tangent, rectified linear unit) in various neurons (e.g., different neurons can have the same or different activation functions as each other). As still another example, the machine learning model can include any suitable interneuron connections or interlayer connections (e.g., forward connections, skip connections, recurrent connections).

In various cases, the scheduling component can execute the machine learning model on the operational history and on the metadata, and such execution can cause the machine learning model to determine the future time or date. More specifically, the scheduling component can concatenate the operational history and the metadata together, the scheduling component can feed such concatenation to an input layer of the machine learning model, such concatenation can complete a forward pass through one or more hidden layers of the machine learning model, and an output layer of the machine learning model can compute or calculate the future time or date based on activation maps from the one or more hidden layers.

In various aspects, the future time or date can be considered as being whatever time or date in the future that the machine learning model has inferred would be suitable, appropriate, or convenient for performing the maintenance task on the chromatograph-equipped mass spectrometer. In particular, the future time or date can be considered as being some time or date that the machine learning model has inferred would be consistent with the metadata, would not coincide with the runtime log, and would coincide with the GUI interaction log. That is, the machine learning model can be considered as inferring that: the runtime log suggests that the chromatograph-equipped mass spectrometer is not likely to run or analyze a sample at the future time or date; the runtime log suggests that the chromatograph-equipped mass spectrometer is not likely to begin running or analyzing a sample after the future time or date but within the duration of the maintenance task; the GUI interaction log suggests that the user or technician is likely to be interacting, and thus physically present, with the chromatograph-equipped mass spectrometer at the future time or date; and the future time or date is not too far off into the future given the priority level of the maintenance task.

In some aspects, rather than predicting the future time or date alone, the machine learning model can instead predict a plurality of possible times or dates, any of which would be suitable, appropriate, or convenient for performance of the maintenance task. In such cases, the future time or date can be chosen or selected by the user or technician from that plurality of possible times or dates.

Note that, in order for the future time or date to be actually suitable, appropriate, or convenient for performance of the maintenance task, the machine learning model can first undergo training. In various aspects, such training can be facilitated in any suitable fashion (e.g., supervised training, unsupervised training, reinforcement learning).

In any case, the scheduling component can predict the future time or date via machine learning, and the scheduling component can accordingly schedule the maintenance task to be performed on the chromatograph-equipped mass spectrometer at the future time or date. Indeed, in some aspects, the scheduling component can visually render on an electronic display of the scientific instrument, or transmit to any suitable computing device, electronic notifications indicating that the maintenance task is to be performed at the future time or date. Such electronic notifications can, in some cases, be recurring, so as to serve as repeated reminders that the maintenance task is scheduled to be performed at the future time or date. In other aspects, the scheduling component can mark in any suitable electronic calendar of the user or technician that the maintenance task is to be performed at the future time or date.

In this way, the scheduling component can automatically schedule or slot the future time or date for performance of the maintenance task on the chromatograph-equipped mass spectrometer. Thus, such scheduling can be considered as insulated or protected from manual scheduling errors that might otherwise be committed by the user or technician. In other words, such automatic scheduling can be considered as safeguarding against: a user or technician that might forget to manually schedule the maintenance task; a user or technician that might deliberately choose not to manually schedule the maintenance task; or a user or technician that might inadvertently manually schedule the maintenance task for a time or date that is too far off into the future.

In various embodiments, the preparation component of the computerized tool can electronically initiate, perform, or otherwise execute any suitable hardware adjustments on the chromatograph-equipped mass spectrometer in preparation for performance of the maintenance task. More specifically, the chromatograph-equipped mass spectrometer can comprise any suitable actuatable hardware, such as temperature control devices (e.g., column oven, injector housing, ion source heater), fluid flow control devices (e.g., carrier fluid valves, carrier fluid pumps, vacuum pumps), or electricity control devices (e.g., ion beam emitter circuit switches, power supplies). In various aspects, the maintenance task can be mapped or otherwise correlated to one or more particular adjustments to (e.g., full or partial activation of, full or partial deactivation of) any of such actuatable hardware, where such one or more particular adjustments can be considered as placing the chromatograph-equipped mass spectrometer into an operational state that is amenable to the maintenance task (e.g., if the maintenance task requires that the column of the chromatograph-equipped mass spectrometer be at a particular temperature, then the one or more particular adjustments can include heating or cooling the column to that particular temperature; if the maintenance task requires that the ion beam emitter of the chromatograph-equipped mass spectrometer be at a particular voltage, then the one or more particular adjustments can include powering up or powering down the ion beam emitter to that particular voltage). In various instances, the preparation component can, in response to determining that less than any suitable threshold amount of time (e.g., however long the one or more particular adjustments are expected to take) remains until the future time or date occurs, transmit any suitable electronic control signals to the chromatograph-equipped mass spectrometer, so as to perform or execute the one or more particular adjustments. In this way, the preparation component can be considered as automatically prepping the chromatograph-equipped mass spectrometer for the performance of the maintenance task.

Accordingly, various embodiments of the computerized tool described herein can automatically detect when the chromatograph-equipped mass spectrometer warrants performance of a maintenance task, automatically schedule performance of the maintenance at an appropriate or convenient future time or date, and automatically prepare the chromatograph-equipped mass spectrometer for the maintenance task prior to the future time or date. Thus, such embodiments can be considered as enriching or otherwise enhancing the smart or intelligent functionalities of the chromatograph-equipped mass spectrometer.

Various embodiments described herein can be employed to use hardware or software to solve problems that are highly technical in nature (e.g., to facilitate intelligent maintenance for scientific instruments), that are not abstract and that cannot be performed as a set of mental acts by a human. Further, some of the processes performed can be performed by a specialized computer (e.g., mass spectrometer comprising an ion detector, deep learning neural network comprising internal parameters such as convolutional kernels) for carrying out defined acts related to scientific instruments.

For example, such defined acts can include: determining, by a scientific instrument comprising a chromatograph-equipped mass spectrometer, and based on an electronic counter or readback sensor associated with the chromatograph-equipped mass spectrometer failing to satisfy a threshold, whether performance of a maintenance task on the chromatograph-equipped mass spectrometer is warranted; scheduling, by the scientific instrument and in response to a determination that the performance of the maintenance task is warranted, a time or date for the performance of the maintenance task, wherein the time or date can be predicted by a machine learning model based on an operational history of the chromatograph-equipped mass spectrometer or metadata pertaining to the maintenance task; and preparing, by the scientific instrument, for the performance of the maintenance task via adjusting, prior to the time or date, actuatable hardware of the chromatograph-equipped mass spectrometer.

Such defined acts are inherently computerized. Indeed, scientific instruments, such as chromatographs and mass spectrometers, are highly-technical computerized devices comprising specific computerized hardware (e.g., temperature sensors, pressure sensors, voltage sensors, ion beam emitters, ion focusing lenses, mass analyzers, ion detectors). A scientific instrument and the operations that it performs cannot be implemented by the human mind, or by a human with pen and paper, in any reasonable or practicable way without computers. Likewise, a machine learning model (e.g., a deep learning neural network) is also an inherently computerized construct that cannot be trained or executed by the human mind, or by a human with pen and paper, in any reasonable or practicable way without computers.

Moreover, various embodiments described herein can integrate into a practical application various teachings relating to intelligent maintenance for scientific instruments. As explained above, a scientific instrument can determine whether or not a given maintenance task should be performed on it. When existing techniques are implemented, the scientific instrument notifies a user or technician that the given maintenance task should be performed, the user or technician manually chooses whatever time or date on which they want to perform the maintenance task, and the user or technician subsequently manually performs the maintenance task on that time or date. Such reliance upon manual scheduling can yield situations in which the maintenance task is performed at suboptimal times (e.g., the user or technician can mistakenly schedule a time or date that is too far into the future given a severity or criticality of the maintenance task; the user or technician can forget or choose not to schedule the maintenance task at all), which can cause the scientific instrument to experience unaddressed or unrepaired degradation of its constituent hardware.

Various embodiments described herein can help to ameliorate such unaddressed or unrepaired degradation via intelligent maintenance. In particular, various embodiments described herein can involve: automatically detecting (e.g., via electronic counters or readback sensors) whether a maintenance task is warranted for the scientific instrument; automatically identifying (e.g., via machine learning), in response to detecting that the maintenance task is warranted, a future time or date that would be suitable or convenient for performance of the maintenance task; automatically scheduling the maintenance task to be performed at the future time or date; and automatically adjusting, prior to the future time or date, actuatable hardware (e.g., heaters, coolers, fluid valves, fluid pumps) of the scientific instrument in preparation for the maintenance task. Thus, such embodiments can help to reduce the likelihood of situations in which the scientific instrument analyzes samples with degraded or damaged constituent hardware (e.g., can help to avoid situations in which users or technicians forget to schedule maintenance tasks; can help to avoid situations in which users or technicians schedule maintenance tasks at inappropriate or excessively delayed times). For at least these reasons, various embodiments described herein can be considered as a concrete and tangible technical improvement in the field of scientific instruments. Accordingly, various embodiments described herein certainly qualify as useful and practical applications of computers.

Furthermore, various embodiments described herein can control real-world tangible devices based on the disclosed teachings. For example, various embodiments described herein can electronically activate, deactivate, or otherwise actuate real-world hardware (e.g., ion beam emitters, ion focusing lenses, carrier fluid valves/pumps) of real-world scientific instruments (e.g., chromatographs, mass spectrometers, autosamplers).

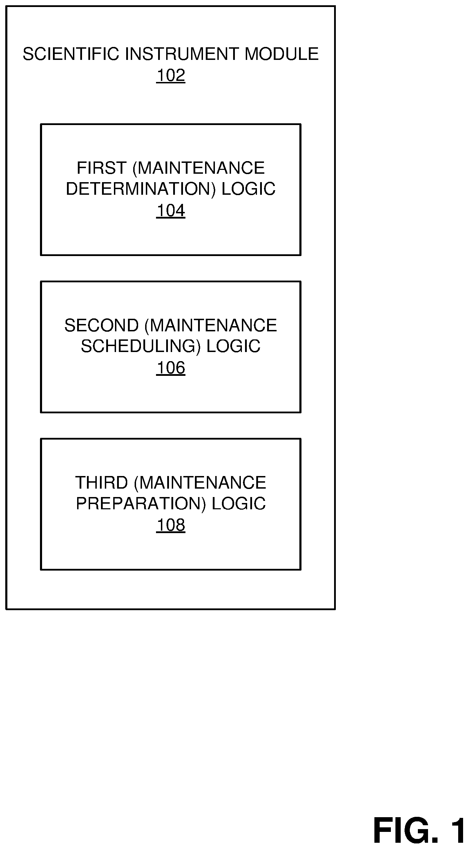

FIG. 1 illustrates an example, non-limiting block diagram of a scientific instrument module 102 in accordance with various embodiments described herein.

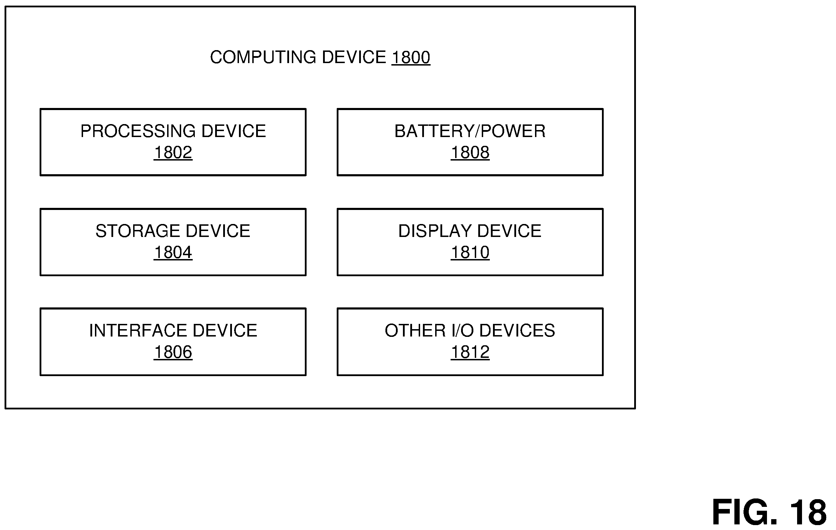

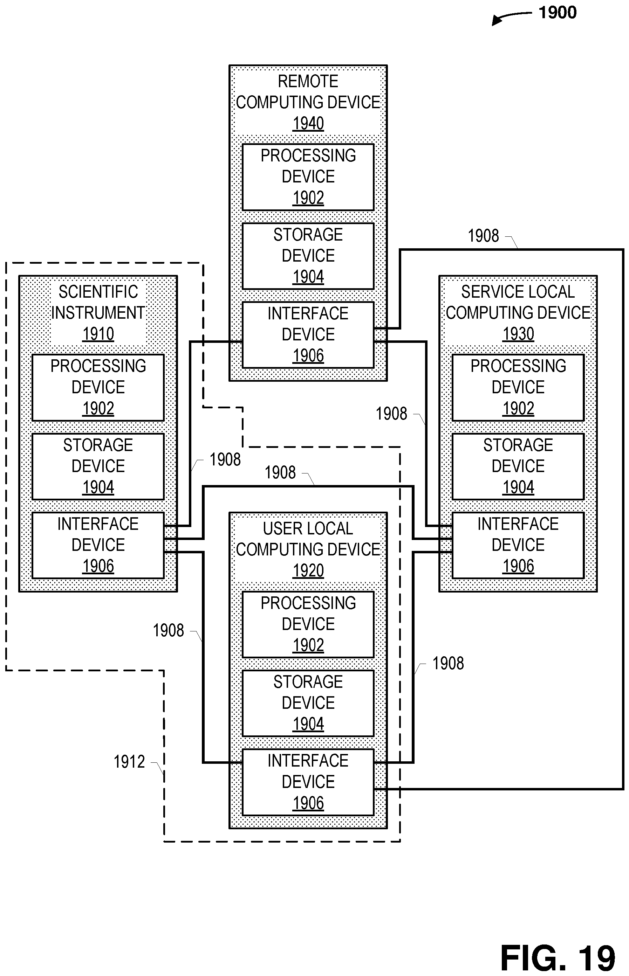

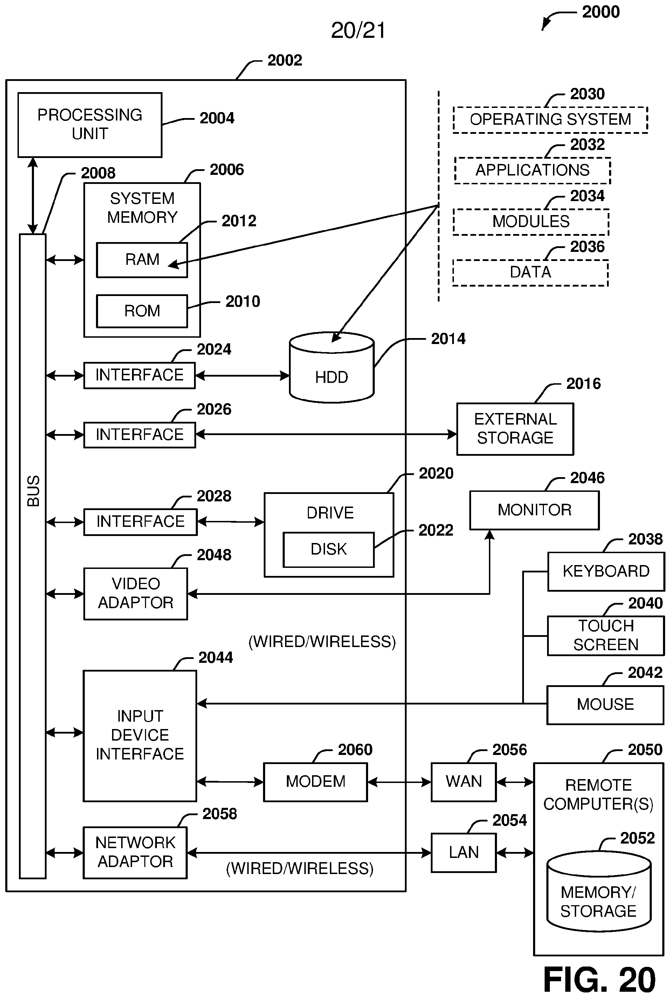

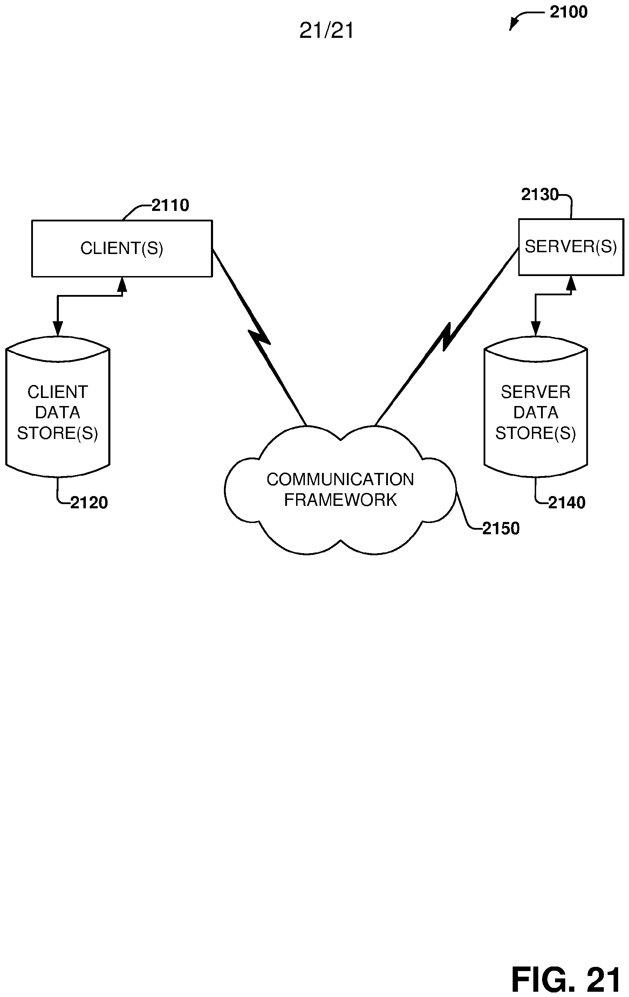

In various embodiments, the scientific instrument module 102 can be implemented by circuitry (e.g., including electrical or optical components), such as a programmed computing device. Logic of the scientific instrument module 102 can be included in a single computing device or can be distributed across multiple computing devices that are in communication with each other as appropriate. Examples of computing devices that may, singly or in combination, implement the scientific instrument module 102 are discussed herein with reference to FIGs. 18 and 20, and examples of systems or networks of interconnected computing devices, in which the scientific instrument module 102 may be implemented across one or more of the computing devices, are discussed herein with reference to FIGs. 19 and 21.

The scientific instrument module 102 can include first logic 104, second logic 106, and third logic 108. As used herein, the term "logic" can include an apparatus that is to perform a set of operations associated with the logic. For example, any of the logic elements included in the scientific instrument module 102 can be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" can refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module can omit one or more of the logic elements depicted in the associated drawings; for example, a module may include a subset of the logic elements depicted in the associated drawings when that module is to perform a subset of the operations discussed herein with reference to that module.

In various embodiments, there can be a scientific instrument corresponding to the scientific instrument module 102. In various aspects, the scientific instrument can be any suitable computerized device that can electronically measure some scientifically-relevant, clinically-relevant, or research-relevant characteristic, property, or attribute of an analytical sample (e.g., of a known or unknown mixture, compound, or collection of matter). As a non-limiting example, a scientific instrument can be a mass spectrometer that is operatively coupled to a chromatograph. In such case, the scientific instrument can measure or determine ion spectra (e.g., relative ion abundance as a function of mass-to-charge ratio) of the analytical sample. As another non-limiting example, a scientific instrument can be a scanning electron microscope. In such case, the scientific instrument can measure or determine a surface topography of the analytical sample.

In various embodiments, the first logic 104 can determine whether or not the scientific instrument is currently or presently in need of a maintenance task. In various aspects, the first logic 104 can facilitate such determination in any suitable fashion.

As a non-limiting example, the first logic 104 can, in some cases, facilitate such determination by leveraging any suitable electronic sensors that are embedded within or otherwise integrated with the scientific instrument. For instance, the scientific instrument can comprise a temperature, pressure, voltage, current, moisture, or strain sensor that can measure a current or present-time temperature, pressure, voltage, electric current, moisture content, or strain of the scientific instrument. In some cases, if the current or present-time temperature, pressure, voltage, electric current, moisture content, or strain of the scientific instrument satisfies any suitable threshold value that corresponds to the maintenance task, then the first logic 104 can conclude or determine that the scientific instrument is not currently or presently in need of the maintenance task. On the other hand, if the current or present-time temperature, pressure, voltage, electric current, moisture content, or strain of the scientific instrument fails to satisfy the threshold value, then the first logic 104 can instead conclude or determine that the scientific instrument is currently or presently in need of the maintenance task.

As another non-limiting example, the first logic 104 can, in various aspects, facilitate such determination by leveraging any suitable electronic counters that are embedded within or otherwise integrated with the scientific instrument. For instance, the scientific instrument can comprise a counter that tracks or tallies the total number of occurrences of any suitable defined event related to the scientific instrument (e.g., tracks or tallies total number of sample injections since most recent injector liner change). In some cases, if the current or present-time tally of the counter satisfies any suitable threshold value that corresponds to the maintenance task, then the first logic 104 can conclude or determine that the scientific instrument is not currently or presently in need of the maintenance task. On the other hand, if the current or present-time tally fails to satisfy the threshold value, then the first logic 104 can instead conclude or determine that the scientific instrument is currently or presently in need of the maintenance task.

In various embodiments, the second logic 106 can, in response to the first logic 104 determining the scientific instrument is not currently or presently in need of the maintenance task, refrain from performing any actions or operations. However, in various aspects, the second logic 106 can, in response to the first logic 104 determining that the scientific instrument is currently or presently in need of the maintenance task, schedule the maintenance task to be performed on the scientific instrument at an automatically-predicted time or date that would be convenient or suitable for the maintenance task.

In particular, the second logic 106 can, in various aspects, access an operational history of the scientific instrument and metadata associated with the maintenance task. In various aspects, the operational history can indicate or convey past times or dates during which the scientific instrument was analyzing samples and other past times or dates during which the scientific instrument was not analyzing samples. Furthermore, the operational history can, in various instances, indicate or convey past times or dates at which a GUI (e.g., touchscreen) of the scientific instrument was clicked or otherwise interacted with by users or technicians and other past times or dates at which the GUI was not clicked or otherwise interacted with by users or technicians. In various cases, the metadata can indicate or convey any suitable properties or characteristics of the maintenance task. In particular, the metadata can indicate an expected duration of the maintenance task or a priority level of the maintenance task. In any case, the second logic 106 can execute a trained machine learning model (e.g., deep learning neural network) on the operational history and on the metadata, and such execution can cause the trained machine learning model to compute as output a future time or date that would be convenient or otherwise appropriate for performance of the maintenance task (e.g., a future time or date at which a user or technician is likely to interact with the GUI, at which the scientific instrument is likely to not analyze a sample, that is not excessively postponed in view of the priority level of the scientific instrument, and that allows enough time for completion of the maintenance task).

In various embodiments, the third logic 108 can, prior to occurrence of the automatically-predicted time or date, facilitate any suitable automated hardware adjustments of the scientific instrument in preparation for performance of the maintenance task. In particular, the scientific instrument can comprise any suitable pieces of actuatable hardware (e.g., temperature control devices, fluid flow control devices, high-voltage electricity control devices), and the performance of the maintenance task can require or otherwise depend upon various pieces of such actuatable hardware being in particular operational states or modes. In various aspects, the third logic 108 can, in response to there being less than any suitable threshold amount of time before occurrence of the automatically-predicted time or date, instruct, command, or control such various pieces of actuatable hardware to enter such particular operational states or modes (e.g., when the automatically-predicted time or date is less than a threshold margin away, the third logic 108 can raise or reduce one or more interior temperatures, one or more fluid flow rates, or one or more voltage levels of the scientific instrument). In various cases, such hardware adjustments can be considered as readying or preparing the scientific instrument for performance of the maintenance task.

Accordingly, the scientific instrument module 102 can facilitate intelligent maintenance for scientific instruments.

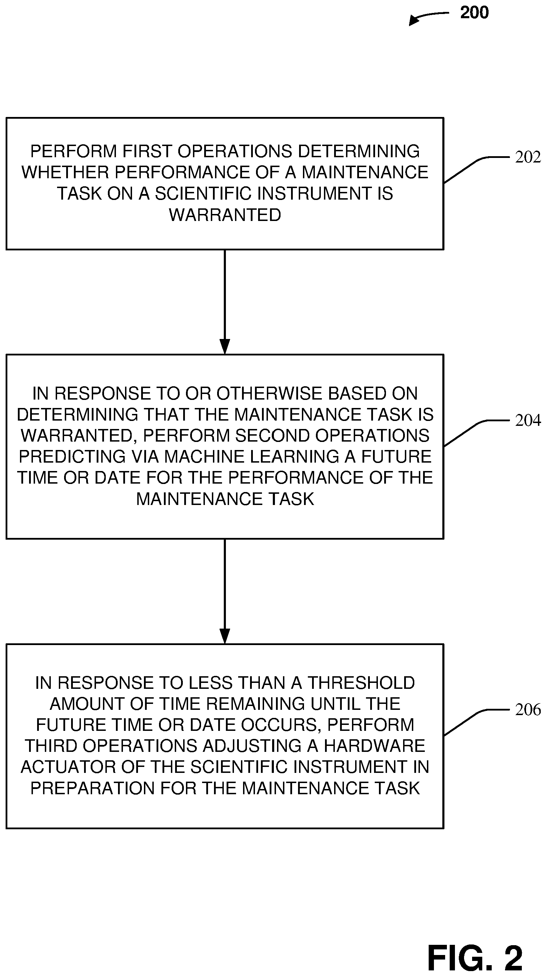

FIG. 2 is an example, non-limiting flow diagram of a computer-implemented method 200 in accordance with various embodiments described herein. The operations of the computer-implemented method 200 may be used in any suitable setting to perform any suitable operations (e.g., can be performed by or used in conjunction with any of the various modules, computing devices, or graphical user interfaces described with respect to of FIGs. 1, 17, 18, 19, 20, and 21). Operations are illustrated once each and in a particular order in FIG. 2, but the operations may be reordered or repeated as desired and appropriate (e.g., different operations performed may be performed in parallel, as suitable).

In various aspects, act 202 can include performing first operations determining whether performance of a maintenance task on a scientific instrument is warranted. In various cases, the first logic 104 can perform or otherwise facilitate act 202.

In various instances, act 204 can include, performing, in response to or otherwise based on determining that the maintenance task is warranted, second operations predicting via machine learning a future time or date for the performance of the maintenance task. In various cases, the second logic 106 can perform or otherwise facilitate act 204.

In various aspects, act 206 can include performing, in response to less than a threshold amount of time remaining until the future time or date occurs, third operations adjusting a hardware actuator of the scientific instrument in preparation for the maintenance task. In various cases, the third logic 108 can perform or otherwise facilitate act 206.

Accordingly, the computer-implemented method 200 can facilitate intelligent maintenance for scientific instruments.

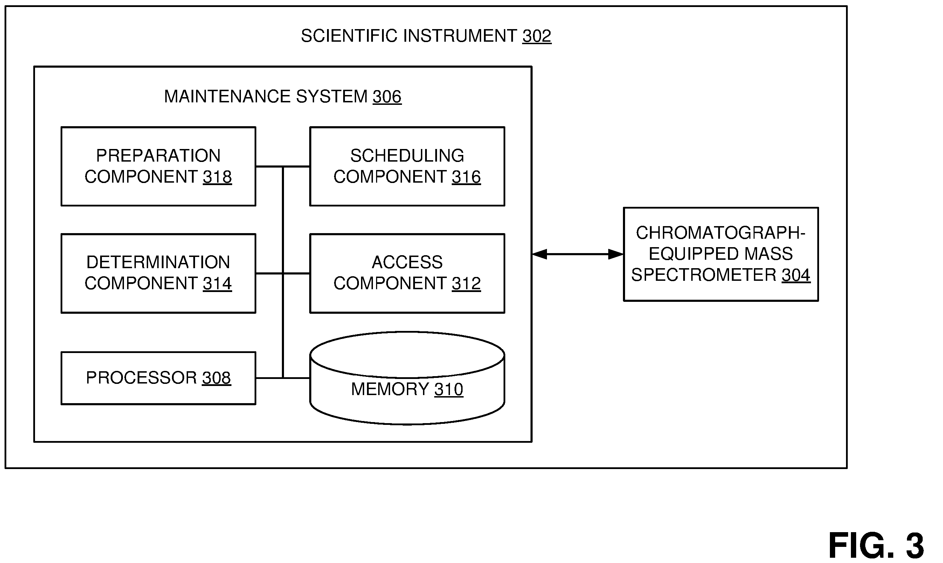

Various embodiments described herein can be implemented to facilitate intelligent maintenance for any suitable scientific instruments. As a specific and non-limiting example, various embodiments described herein can be implemented to facilitate intelligent maintenance for a scientific instrument that comprises a chromatograph-equipped mass spectrometer. Non-limiting aspects regarding how various embodiments can be applied to a chromatograph-equipped mass spectrometer are described with respect to FIGs. 3-16.

FIG. 3 illustrates a block diagram of an example, non-limiting scientific instrument that can facilitate intelligent maintenance in accordance with one or more embodiments described herein. As shown, a scientific instrument 302 can comprise a chromatograph-equipped mass spectrometer 304.

In various aspects, the chromatograph-equipped mass spectrometer 304 can, as its name suggests, comprise a mass spectrometer that is operatively coupled to a chromatograph.

In various embodiments, the chromatograph of the chromatograph-equipped mass spectrometer 304 can be any suitable chromatograph, such as a gas chromatograph or a liquid chromatograph. In various aspects, the chromatograph can comprise any suitable constituent hardware for separating an analytical sample into two or more compositional parts. As a non-limiting example, the constituent hardware can comprise an injector, an oven-heated column, and carrier fluid valves or pumps. In various aspects, the carrier fluid valves or pumps can cause carrier fluid (e.g., an inert gas, or a water-organic-solvent mixture) to flow through the chromatograph. In various instances, the injector can inject an analytical sample (e.g., a compound to be measured or analyzed) into the flowing carrier fluid. In various cases, the injected analytical sample can be carried by the flowing carrier fluid through the oven-heated column, which can contain any suitable absorbent packing material or stationary phase film. In various aspects, different compositional parts (e.g., different elements or molecules) of the analytical sample can interact differently or uniquely with the absorbent packing material or stationary phase film, thereby causing the different compositional parts of the analytical sample to have different flow rates through the oven-heated column. Due to such different flow rates, the different compositional parts can be considered as being physically separated from each other.

In various aspects, the mass spectrometer of the chromatograph-equipped mass spectrometer 304 can be any suitable mass spectrometer. In various instances, the mass spectrometer can comprise any suitable constituent hardware for measuring ion spectra of analytical samples. As a non-limiting example, the constituent hardware can comprise an ion beam emitter, ion optics equipment, a mass analyzer, and an ion detector. In various cases, the ion beam emitter can receive from the chromatograph a compositional part of the analytical sample and can ionize that compositional part into an ion beam. The ion beam emitter can facilitate this via any suitable ionization technique, such as electron ionization, chemical ionization, matrix assisted laser desorption ionization, electrospray ionization, photoionization, or inductively coupled plasma ionization, any of which can be implemented in a vacuum or at atmospheric pressure. In various aspects, the ion optics equipment can channel or steer the ion beam produced by the ion beam emitter through the mass analyzer and to the ion detector. Non-limiting examples of such ion optics equipment can include ion focusing lenses, ion guides, or ion deflectors. In various instances, the mass analyzer can separate or sort whatever ions are present in the ion beam according to their mass-to-charge ratios. Non-limiting examples of the mass analyzer can include quadrupole mass analyzers, time-of-flight mass analyzers, magnetic sector mass analyzers, electrostatic sector mass analyzers, quadrupole ion trap mass analyzers, or ion cyclotron resonance mass analyzers. In various cases, the ion detector can electronically detect or measure the relative abundances of whatever ions strike it. Non-limiting examples of the ion detector can include electron multiplier ion detectors or Faraday cup ion detectors.

In any case, when given an analytical sample, the chromatograph-equipped mass spectrometer 304 can produce an ion spectrum plotting relative abundance against mass-to-charge ratio of the various ions of the analytical sample.

In various embodiments, the scientific instrument 302 can comprise a maintenance system 306. In various cases, the maintenance system 306 can facilitate intelligent maintenance for the scientific instrument 302.

In various aspects, the maintenance system 306 can comprise a processor 308 (e.g., computer processing unit, microprocessor) and a non-transitory computer-readable memory 310 that is operably or operatively or communicatively connected or coupled to the processor 308. The non-transitory computer-readable memory 310 can store computer-executable instructions which, upon execution by the processor 308, can cause the processor 308 or other components of the maintenance system 306 (e.g., access component 312, determination component 314, scheduling component 316, preparation component 318) to perform one or more acts. In various embodiments, the non-transitory computer-readable memory 310 can store computer-executable components (e.g., access component 312, determination component 314, scheduling component 316, preparation component 318), and the processor 308 can execute the computer-executable components.

In various embodiments, the maintenance system 306 can comprise an access component 312. In various aspects, the access component 312 can electronically communicate or otherwise electronically interact with (e.g., transmit electronic signals to, receive electronic signals from) the chromatograph-equipped mass spectrometer 304. Accordingly, any other components of the maintenance system 306 can communicate or interact with the chromatograph-equipped mass spectrometer 304 through or via the access component 312 (e.g., the access component 312 can act as an intermediary between any other components of the maintenance system 306 and the chromatograph-equipped mass spectrometer 304). However, this is a mere non-limiting example. In other cases, the access component 312 can be omitted, and any other components of the maintenance system 306 can communicate or interact directly with the chromatograph-equipped mass spectrometer 304.

In various embodiments, the maintenance system 306 can comprise a determination component 314. In various aspects, as described herein, the determination component 314 can electronically determine or detect when performance of a given maintenance task is warranted for the chromatograph-equipped mass spectrometer 304.

In various embodiments, the maintenance system 306 can comprise a scheduling component 316. In various instances, as described herein, the scheduling component 316 can electronically schedule, via machine learning, a future time or date for performance of the maintenance task on the chromatograph-equipped mass spectrometer 304.

In various embodiments, the maintenance system 306 can comprise a preparation component 318. In various cases, as described herein, the preparation component 318 can electronically prepare the chromatograph-equipped mass spectrometer 304 for the maintenance task, by actuating or otherwise adjusting constituent hardware of the chromatograph-equipped mass spectrometer 304.

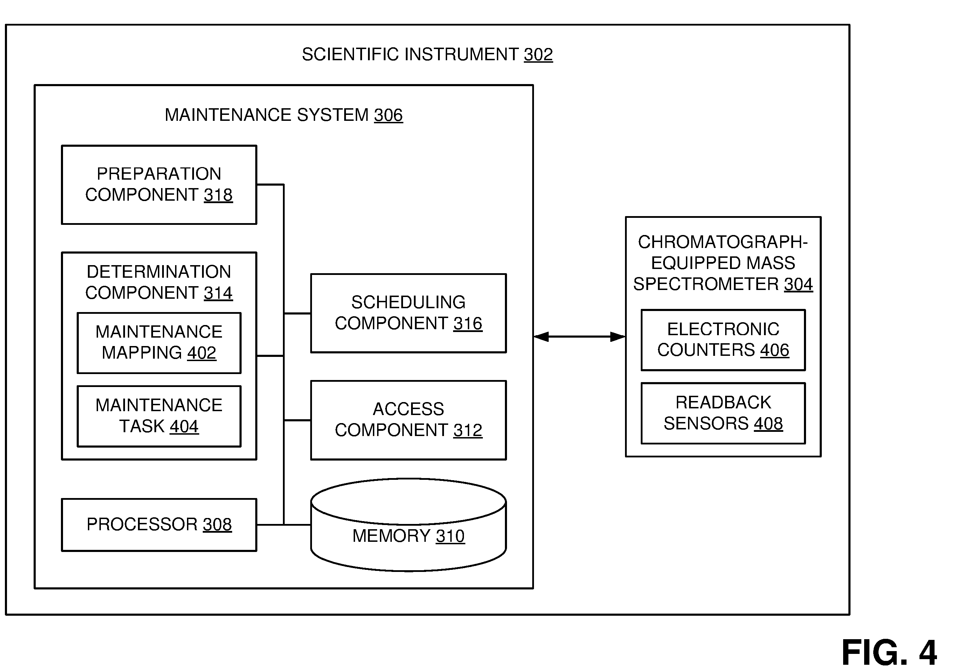

FIG. 4 illustrates a block diagram of an example, non-limiting scientific instrument including a maintenance mapping and a maintenance task that can facilitate intelligent maintenance in accordance with one or more embodiments described herein.

In various embodiments, the determination component 314 can electronically determine whether or not performance of a maintenance task 404 is warranted on the chromatograph-equipped mass spectrometer 304, based on a maintenance mapping 402, on one or more electronic counters 406, or on one or more readback sensors 408.

In various aspects, the maintenance task 404 can be any suitable hardware repair task or consumable replenishment task that can be manually performed on the chromatograph-equipped mass spectrometer 304 by a user or technician of the chromatograph-equipped mass spectrometer 304. As some non-limiting examples, the maintenance task 404 can be: replacement of an autosampler syringe of the chromatograph-equipped mass spectrometer 304; replenishment of solvent wash of the autosampler of the chromatograph-equipped mass spectrometer 304; removal of solvent waste from the autosampler of the chromatograph-equipped mass spectrometer 304; replacement of a carrier fluid filter of the chromatograph-equipped mass spectrometer 304; replacement of a non-carrier fluid filter of the chromatograph-equipped mass spectrometer 304; replacement of a septum of the chromatograph-equipped mass spectrometer 304; cleaning of an inlet of the chromatograph-equipped mass spectrometer 304; replacement of a gold seal of the chromatograph-equipped mass spectrometer 304; replacement of pre-column tubing or post-column tubing of the chromatograph-equipped mass spectrometer 304; trimming of the column of the chromatograph-equipped mass spectrometer 304; replacement of the column of the chromatograph-equipped mass spectrometer 304; replacement of a fluid cylinder of the chromatograph-equipped mass spectrometer 304; repairing a fluid leak of the chromatograph-equipped mass spectrometer 304; cleaning the ion beam emitter of the chromatograph-equipped mass spectrometer 304; replenishing a calibrant of the chromatograph-equipped mass spectrometer 304; cleaning of ion optics equipment of the chromatograph-equipped mass spectrometer 304; repairing an electrically floating ion focusing lens of the chromatograph-equipped mass spectrometer 304; repairing an electronic transmitter or receiver of the chromatograph-equipped mass spectrometer 304; replacing an electron multiplier of the chromatograph-equipped mass spectrometer 304; changing an oil or lubricant of the chromatograph-equipped mass spectrometer 304; repairing a diaphragm or scroll pump of the chromatograph-equipped mass spectrometer 304; repairing, replacing, or greasing turbo pump oil bearings of the chromatograph-equipped mass spectrometer 304; or replacing a collision fluid cylinder of the chromatograph-equipped mass spectrometer 304.

In various aspects, as shown, the chromatograph-equipped mass spectrometer 304 can comprise the one or more electronic counters 406. In various instances, the one or more electronic counters 406 can comprise any suitable number of electronic counters. In various cases, an electronic counter can be any suitable hardware or software that can count, tally, add up, or otherwise keep track of a total number of occurrences (e.g., as measured with respect to any suitable reference) of any suitable defined event pertaining or relating to operation of the chromatograph-equipped mass spectrometer 304. As a non-limiting example, an electronic counter can tally how many total samples have been run or analyzed by the chromatograph-equipped mass spectrometer 304 since the chromatograph-equipped mass spectrometer 304 most recently received service or maintenance. As another non-limiting example, an electronic counter can tally how many total injections have been performed by an injector of the chromatograph-equipped mass spectrometer 304 since the chromatograph-equipped mass spectrometer 304 most recently received service or maintenance. As even another non-limiting example, an electronic counter can tally how many total hours of operation that the chromatograph-equipped mass spectrometer 304 has accumulated since the chromatograph-equipped mass spectrometer 304 most recently received service or maintenance. As still another non-limiting example, an electronic counter can tally how much total volume or mass of carrier fluid has flown through the chromatograph-equipped mass spectrometer 304 since the chromatograph-equipped mass spectrometer 304 most recently received service or maintenance. As yet another non-limiting example, an electronic counter can tally how many total pass-to-block or block-to-pass transitions an ion focusing lens of the chromatograph-equipped mass spectrometer 304 has undergone since the chromatograph-equipped mass spectrometer 304 most recently received service or maintenance.

In various instances, as shown, the chromatograph-equipped mass spectrometer 304 can comprise the one or more readback sensors 408. In various cases, the one or more readback sensors 408 can comprise any suitable number of readback sensors. In various aspects, a readback sensor can be any suitable hardware or software that can produce an electronic output signal in response to being exposed to any suitable physical stimuli associated with the chromatograph-equipped mass spectrometer 304. As a non-limiting example, a readback sensor can be any suitable temperature sensor (e.g., thermocouple, thermistor) that can electronically measure an interior temperature or interior temperature differential of the chromatograph-equipped mass spectrometer 304. As another non-limiting example, a readback sensor can be any suitable pressure sensor (e.g., resistive, capacitive, piezoelectric, or optical pressure gauge) that can electronically measure an interior pressure or interior pressure differential of the chromatograph-equipped mass spectrometer 304. As even another non-limiting example, a readback sensor can be any suitable voltage sensor (e.g., resistive or capacitive voltage gauge) that can electronically measure an interior voltage or interior voltage differential of the chromatograph-equipped mass spectrometer 304. As still another non-limiting example, a readback sensor can be any suitable humidity sensor (e.g., resistive, capacitive, or thermal conductive humidity gauge) that can electronically measure an interior humidity or interior humidity differential of the chromatograph-equipped mass spectrometer 304. As yet another non-limiting example, a readback sensor can be any suitable motion or deflection sensor (e.g., accelerometer, potentiometer, tachometer, strain gauge) that can electronically measure an interior motion or deflection of the chromatograph-equipped mass spectrometer 304. As another non-limiting example, a readback sensor can be any suitable fluid flow sensor (e.g., Coriolis mass flow meter, ultrasonic flow meter, electromagnetic flow meter) that can electronically measure an interior rate of fluid flow of the chromatograph-equipped mass spectrometer 304. Note that, in some cases, the ion detector of the chromatograph-equipped mass spectrometer 304 can be considered as being a readback sensor.

In any case, the one or more electronic counters 406 and the one or more readback sensors 408 can collectively be considered as measuring a current or present-time operational status of the chromatograph-equipped mass spectrometer 304. In other words, whatever data that is captured or represented by the one or more electronic counters 406 and the one or more readback sensors 408 at any given point in time can be considered as representing the health of the chromatograph-equipped mass spectrometer 304 at that given point in time. Accordingly, the chromatograph-equipped mass spectrometer 304 can be considered as being aware of its own health or operational status and how that health or operational status changes over time.

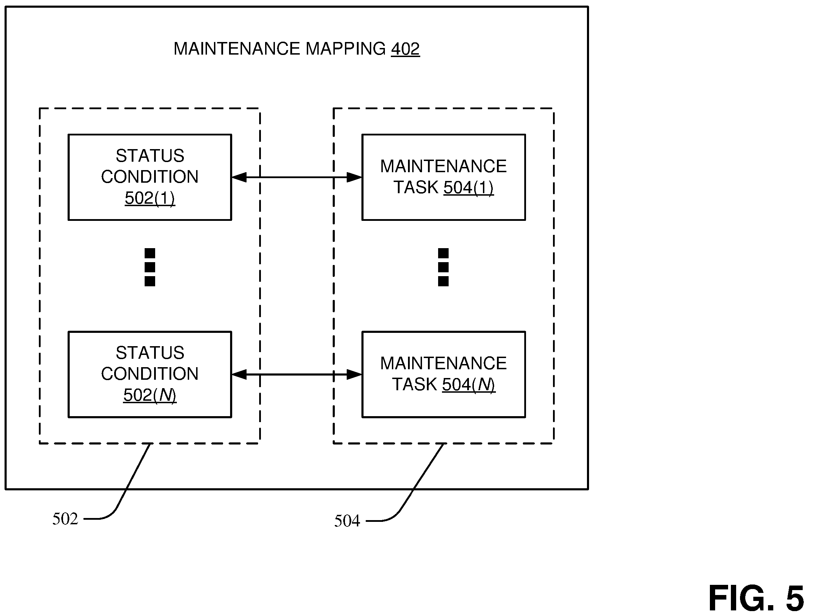

In various embodiments, the maintenance mapping 402 can be any suitable electronic data that can list various maintenance tasks that might be pertinent to the chromatograph-equipped mass spectrometer 304. Moreover, the maintenance mapping 402 can list, for each of those various maintenance tasks, a respective health or operational status condition which can be considered as a trigger indicating that performance of such maintenance task is warranted on the chromatograph-equipped mass spectrometer 304. Accordingly, the determination component 314 can determine whether or not performance of the maintenance task 404 is warranted for the chromatograph-equipped mass spectrometer 304, by comparing whatever operational status is measured by the one or more electronic counters 406 and by the one or more readback sensors 408 to the maintenance mapping 402. Various non-limiting aspects are described with respect to FIG. 5.

FIG. 5 illustrates an example, non-limiting block diagram of the maintenance mapping 402 in accordance with one or more embodiments described herein.

In various aspects, as shown, the maintenance mapping 402 can comprise a set of maintenance tasks 504. In various instances, the set of maintenance tasks 504 can comprise n tasks, for any suitable positive integer n: a maintenance task 504(1) to a maintenance task 504(n). In various cases, each of the set of maintenance tasks 504 can be any suitable unique or distinct maintenance task that can be performable on the chromatograph-equipped mass spectrometer 304. Accordingly, the set of maintenance tasks 504 can all be different from each other. As a non-limiting example, the maintenance task 504(1) can be replacement of an injector liner of the chromatograph-equipped mass spectrometer 304, whereas the maintenance task 504(n) can be cleaning of an ion transfer tube of the chromatograph-equipped mass spectrometer 304.

In various instances, as shown, the maintenance mapping 402 can further comprise a set of status conditions 502. In various cases, the set of status conditions 502 can respectively correspond to the set of maintenance tasks 504. Accordingly, since the set of maintenance tasks 504 can comprise n tasks, the set of status conditions 502 can comprise n conditions: a status condition 502(1) to a status condition 502(n). In various aspects, each of the set of status conditions 502 can be considered as representing or indicating a health or operational status that would warrant performance of a respective one of the set of maintenance tasks 504.

As a non-limiting example, the status condition 502(1) can correspond to the maintenance task 504(1). Thus, the status condition 502(1) can be considered as representing or otherwise indicating some particular health or operational status the occurrence of which would suggest or indicate that performance of the maintenance task 504(1) on the chromatograph-equipped mass spectrometer 304 is warranted, needed, or recommended. Equivalently, the status condition 502(1) can represent or indicate any suitable counter or readback signal thresholds or tolerances, where the failure of the chromatograph-equipped mass spectrometer 304 to satisfy those thresholds or tolerances would suggest or indicate that performance of the maintenance task 504(1) on the chromatograph-equipped mass spectrometer 304 is warranted, needed, or recommended. In still other words, the status condition 502(1) can be considered as representing or delineating some specific hardware problem that might potentially or possibly afflict the chromatograph-equipped mass spectrometer 304, and the maintenance task 504(1) can be considered as the solution or remedy to that specific hardware problem.

As another non-limiting example, the status condition 502(n) can correspond to the maintenance task 504(n). So, the status condition 502(n) can be considered as representing or otherwise indicating some specific health or operational status the occurrence of which would suggest or indicate that performance of the maintenance task 504(n) on the chromatograph-equipped mass spectrometer 304 is warranted, needed, or recommended. Equivalently, the status condition 502(n) can represent or indicate any suitable counter or readback signal thresholds or tolerances, where the failure of the chromatograph-equipped mass spectrometer 304 to satisfy those thresholds or tolerances would suggest or indicate that performance of the maintenance task 504(n) on the chromatograph-equipped mass spectrometer 304 is warranted, needed, or recommended. In still other words, the status condition 502(n) can be considered as representing or otherwise delineating some defined hardware problem that might potentially or possibly afflict the chromatograph-equipped mass spectrometer 304, and the maintenance task 504(n) can be considered as the solution or remedy to that defined hardware problem.

In various aspects, as mentioned above, the one or more electronic counters 406 and the one or more readback sensors 408 can collectively measure a current or present-time health or operational status of the chromatograph-equipped mass spectrometer 304. In various instances, the determination component 314 can compare that current or present-time health or operational status to the set of status conditions 502. If the determination component 314 identifies no status condition that is tripped by (e.g., whose thresholds or tolerances are not satisfied by) the current or present-time health or operational status, the determination component 314 can conclude or determine that the chromatograph-equipped mass spectrometer 304 is not currently or presently in need of any maintenance task. However, if the determination component 314 instead identifies a status condition that is tripped by (e.g., whose thresholds or tolerances are not satisfied by) the current or present-time health or operational status, the determination component 314 can conclude or determine that the chromatograph-equipped mass spectrometer 304 is currently or presently in need of whatever maintenance task corresponds to that status condition, and such maintenance task can be considered as the maintenance task 404.

In this way, the determination component 314 can determine whether or not performance of the maintenance task 404 on the chromatograph-equipped mass spectrometer 304 is warranted.

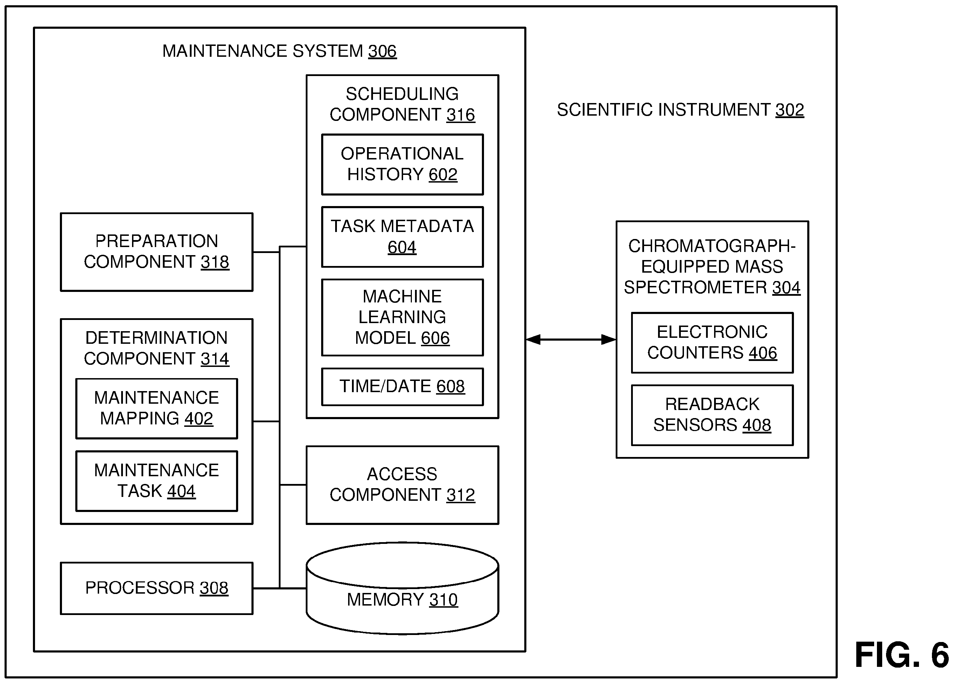

FIG. 6 illustrates a block diagram of an example, non-limiting scientific instrument including a maintenance time or date predicted by a machine learning model that can facilitate intelligent maintenance in accordance with one or more embodiments described herein.

In various embodiments, the scheduling component 316 can electronically store, electronically maintain, or otherwise electronically access from any suitable electronic source (e.g., from the chromatograph-equipped mass spectrometer 304 itself) an operational history 602 associated with the chromatograph-equipped mass spectrometer 304. In various aspects, the operational history 602 can be any suitable electronic data that can indicate or otherwise represent previous times or dates at which the chromatograph-equipped mass spectrometer 304 was being operated or was not being operated.

In various instances, the scheduling component 316 can electronically store, electronically maintain, or otherwise electronically access from any suitable electronic source (e.g., from the maintenance mapping 402) task metadata 604 associated with the maintenance task 404. In various cases, the task metadata 604 can be any suitable electronic data that can indicate or otherwise represent any suitable properties or characteristics of the maintenance task 404.

In various aspects, the scheduling component 316 can electronically store, electronically maintain, electronically control, or otherwise electronically access from any suitable electronic source a machine learning model 606. In various aspects, the machine learning model 606 can be any suitable artificial neural network that can have or otherwise exhibit any suitable internal architecture. For instance, the machine learning model 606 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

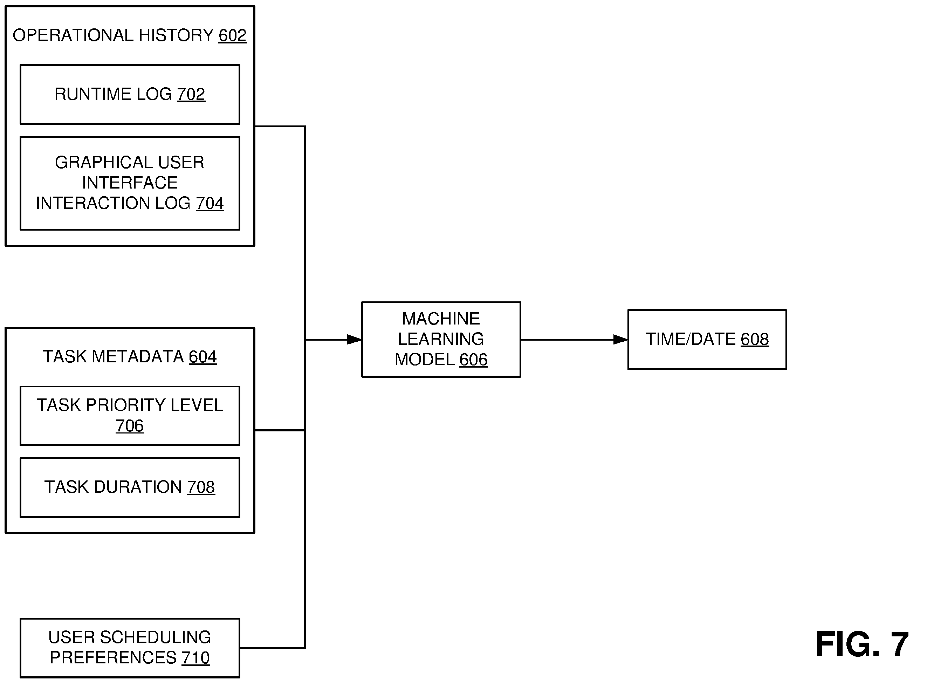

In any case, the scheduling component 316 can electronically execute the machine learning model 606 on the operational history 602 or on the task metadata 604, and such execution can cause the machine learning model 606 to predict as output a time/date 608. In various aspects, the time/date 608 can be considered as some future time or date (e.g., as identified by year, month, week, day, hour, minute, or second) that the machine learning model 606 has inferred or determined would be suitable for performance of the maintenance task 404 on the chromatograph-equipped mass spectrometer 304. Various non-limiting aspects are described with respect to FIGs. 7-8.

FIGs. 7-8 illustrate example, non-limiting block diagrams showing how the machine learning model 606 can predict the time/date 608 in accordance with one or more embodiments described herein.

First, consider FIG. 7. In various embodiments, as shown, the operational history 602 can comprise a runtime log 702 and a graphical user interface interaction log 704 (hereafter "GUI interaction log 704").

In various aspects, the runtime log 702 can be any suitable electronic data that indicates when the chromatograph-equipped mass spectrometer 304 ran or operated in the past. As a non-limiting example, the runtime log 702 can indicate previous or past times or dates at which or during which the chromatograph-equipped mass spectrometer 304 was analyzing samples, and the runtime log 702 can further indicate previous or past times or dates at which or during which the chromatograph-equipped mass spectrometer 304 was not analyzing samples. In other words, the runtime log 702 can be considered as an electronic record or ledger that shows when the chromatograph-equipped mass spectrometer 304 was or was not running in the past.

In various instances, the GUI interaction log 704 can be any suitable electronic data that indicates when a GUI (e.g., touchscreen, or computer keyboard or keypad coupled to an electronic display) of the chromatograph-equipped mass spectrometer 304 was operated in the past. As a non-limiting example, the GUI interaction log 704 can indicate previous or past times or dates at which or during which the GUI of the chromatograph-equipped mass spectrometer 304 was being interacted with (e.g., was being clicked) by a user or technician, and the GUI interaction log 704 can further indicate previous or past times or dates at which or during which the GUI of the chromatograph-equipped mass spectrometer 304 was not being interacted with (e.g., was not being clicked) by a user or technician. Because interacting with (e.g., clicking) the GUI of the chromatograph-equipped mass spectrometer 304 can require physical presence with the chromatograph-equipped mass spectrometer 304, the GUI interaction log 704 can be considered as an electronic record or ledger that shows when a user or technician was or was not physically present with the chromatograph-equipped mass spectrometer 304.

In various aspects, the task metadata 604 can comprise a task priority level 706. In various instances, the task priority level 706 can be any suitable electronic data that can indicate or otherwise represent how important, critical, or urgent the maintenance task 404 is with respect to the chromatograph-equipped mass spectrometer 304. After all, some maintenance tasks (e.g., repairing an electrically disconnected ion focusing lens) can be considered as much more urgent than other maintenance tasks (e.g., cleaning an ion beam emitter). In some cases, the task priority level 706 can be any suitable scalar whose magnitude can indicate the level of importance, criticality, or urgency of the maintenance task 404 (e.g., higher magnitudes can indicate more importance, criticality, or urgency; lower magnitudes can indicate lower importance, criticality, or urgency).

In various instances, the task metadata 604 can comprise a task duration 708. In various cases, the task duration 708 can be any suitable length of time (e.g., measured in hours, minutes, or seconds) that is expected to be consumed by performance of the maintenance task 404 on the chromatograph-equipped mass spectrometer 304.

In various embodiments, as mentioned above, the scheduling component 316 can execute the machine learning model 606 on the operational history 602 and on the task metadata 604, and such execution can yield the time/date 608. More specifically, the scheduling component 316 can concatenate the operational history 602 and the task metadata 604 together. In various aspects, the scheduling component 316 can feed such concatenation to an input layer of the machine learning model 606. In various instances, such concatenation can complete a forward pass through one or more hidden layers of the machine learning model 606. In various cases, an output layer of the machine learning model 606 can compute or calculate the time/date 608, based on activation maps or feature maps produced by the one or more hidden layers.

In any case, the time/date 608 can be any suitable electronic data that indicates a future time or date that the machine learning model 606 has inferred would be suitable, appropriate, or otherwise convenient for performance of the maintenance task 404 on the chromatograph-equipped mass spectrometer 304.

In particular, performance of the maintenance task 404 can be convenient or otherwise appropriate at a time at which the chromatograph-equipped mass spectrometer 304 is not analyzing a sample (e.g., maintenance cannot be performed when a sample is being run). Accordingly, the machine learning model 606 can, in some aspects, be considered as inferring that the runtime log 702 suggests that the chromatograph-equipped mass spectrometer 304 is not likely to be analyzing a sample at the time/date 608. In other words, the machine learning model 606 can be considered as extrapolating the runtime log 702 into the future, and the time/date 608 can be some future time or date at which, according to such extrapolation, the chromatograph-equipped mass spectrometer 304 is not likely to be running a sample.

Moreover, performance of the maintenance task 404 can be convenient or otherwise appropriate at a time at which the GUI of the chromatograph-equipped mass spectrometer 304 is being interacted with by a user or technician (e.g., maintenance cannot be performed in the physical absence of a user or technician, and GUI interactions can imply that a user or technician is physically present with the chromatograph-equipped mass spectrometer 304). Accordingly, the machine learning model 606 can, in some instances, be considered as inferring that the GUI interaction log 704 suggests that the GUI of the chromatograph-equipped mass spectrometer 304 is likely to be interacted with at the time/date 608. In other words, the machine learning model 606 can be considered as extrapolating the GUI interaction log 704 into the future, and the time/date 608 can be some future time or date at which, according to such extrapolation, a user or technician is likely to be physically present with the chromatograph-equipped mass spectrometer 304.

Furthermore, an appropriate timing for performance of the maintenance task 404 can depend upon the task priority level 706. Indeed, the more important, critical, or urgent the maintenance task 404 is, the earlier or sooner the maintenance task 404 should be performed on the chromatograph-equipped mass spectrometer 304. In contrast, the less important, critical, or urgent the maintenance task 404 is, the later or more postponed performance of the maintenance task 404 can be. Accordingly, because the machine learning model 606 can receive as input the task priority level 706, the time/date 608 can be considered as being based on (e.g., as being appropriate in view of) the task priority level 706.

Further still, an appropriate timing for performance of the maintenance task 404 can depend upon the task duration 708. Indeed, as mentioned above, because the time/date 608 can be based on the runtime log 702, the time/date 608 can be some future time or date at which the chromatograph-equipped mass spectrometer 304 is not likely to be running a sample. However, not every future time or date at which the chromatograph-equipped mass spectrometer 304 is unlikely to be running a sample can be appropriate or convenient for performance of the maintenance task 404. After all, performance of the maintenance task 404 can consume some non-zero amount of time, and the chromatograph-equipped mass spectrometer 304 cannot or should not run a sample during that non-zero amount of time. Accordingly, because the time/date 608 can be based on both the runtime log 702 and the task duration 708, the time/date 608 can be some future time or date: at which the chromatograph-equipped mass spectrometer 304 is not likely to be running a sample; and after which the chromatograph-equipped mass spectrometer 304 is not likely to begin running a sample for at least the task duration 708.

Note that, in various embodiments, the machine learning model 606 can be configured to predict the time/date 608 based on any other suitable data that can supplement or complement the operational history 602 or the task metadata 604. Indeed, such supplemental data can be concatenated with the operational history 602 and with the task metadata 604, and such concatenation can complete a forward pass through the machine learning model 606 as mentioned above. As a non-limiting example, such supplemental data can include one or more user scheduling preferences 710. In various cases, the one or more user scheduling preferences 710 can comprise any suitable number of user scheduling preferences. In various aspects, a user scheduling preference can be any suitable electronic data indicating times or dates for which a user prefers to perform maintenance on the chromatograph-equipped mass spectrometer 304 or other times or dates for which the user prefers to not perform maintenance on the chromatograph-equipped mass spectrometer 304. Accordingly, the time/date 608 can, in some cases, be consistent with the one or more user scheduling preferences 710.

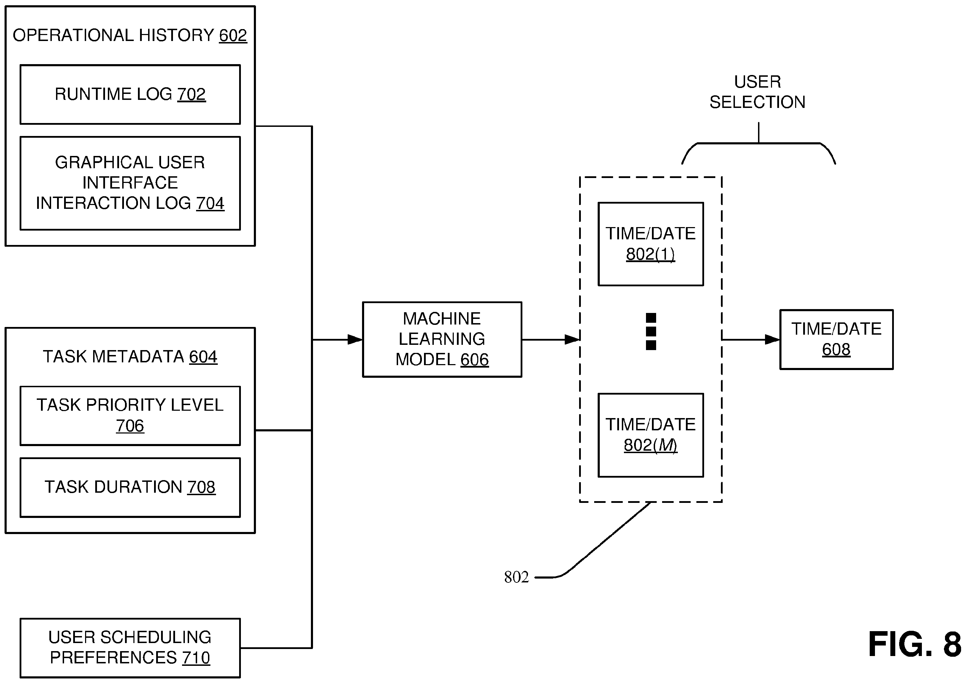

As shown in FIG. 7, the machine learning model 606 can, in some embodiments, directly predict the time/date 608. However, in other embodiments, the machine learning model 606 can instead predict a plurality of possible times/dates each of which would be suitable, appropriate, or convenient for performance of the maintenance task 404 on the chromatograph-equipped mass spectrometer 304, and a user or technician can select the time/date 608 from such plurality. Various non-limiting aspects are described with respect to FIG. 8.

As shown in FIG. 8, the machine learning model 606 can, in some aspects, predict a plurality of times/dates 802, based on the operational history 602 and the task metadata 604. That is, the scheduling component 316 can concatenate the operational history 602 and the task metadata 604 together (along with any other supplementary or complementary data, such as the one or more user scheduling preferences 710), the scheduling component 316 can feed such concatenation to the input layer of the machine learning model 606, such concatenation can complete a forward pass through the one or more hidden layers of the machine learning model 606, and the output layer of the machine learning model 606 can compute or calculate the plurality of times/dates 802 based on activation maps or feature maps produced by the one or more hidden layers.

In any case, the plurality of times/dates 802 can comprise m times/dates, for any suitable positive integer m: a time/date 802(1) to a time/date 802(m). In various aspects, each of the plurality of times/dates 802 can be a unique or distinct future time or date that the machine learning model 606 has inferred would be suitable, appropriate, or otherwise convenient for performance of the maintenance task 404 on the chromatograph-equipped mass spectrometer 304. In various instances, a user or technician can manually select (e.g., via the GUI) any one of the plurality of times/dates 802, and such selected time/date can be considered as the time/date 608. In some cases, the user or technician can fail to manually select any of the plurality of times/dates 802. In such case, the scheduling component 316 can itself select any of the plurality of times/dates 802, and such selected time/date can be considered as the time/date 608. In situations where the scheduling component 316 itself selects the time/date 608 from the plurality of times/dates 802, the scheduling component 316 can facilitate such selection in any suitable fashion. As a non-limiting example, the scheduling component 316 can choose the time/date 608 randomly from the plurality of times/dates 802. As another non-limiting example, the scheduling component 316 can choose as the time/date 608 whichever of the plurality of times/dates 802 is soonest or least postponed. As yet another non-limiting example, the scheduling component 316 can choose as the time/date 608 whichever of the plurality of times/dates 802 is latest or most postponed.

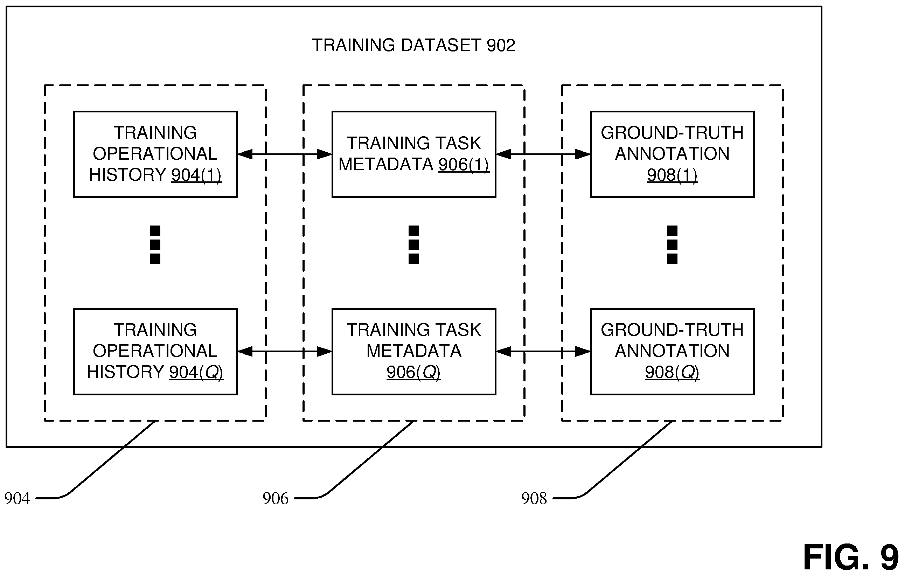

In any case, in order for the time/date 608 to be accurate (e.g., to be actually convenient or appropriate in view of the operational history 602 or of the task metadata 604), the machine learning model 606 can first undergo any suitable type or paradigm of training. As a non-limiting example, the machine learning model 606 can undergo supervised training. Non-limiting aspects are described with respect to FIGs. 9-10.

FIG. 9 illustrates an example, non-limiting block diagram of a training dataset 902 in accordance with one or more embodiments described herein.

In various aspects, the training dataset 902 can comprise a set of training operational histories 904. In various instances, the set of training operational histories 904 can comprise q histories, for any suitable positive integer q: a training operational history 904(1) to a training operational history 904(q). In various cases, each of the set of training operational histories 904 can be electronic data having the same format, size, or dimensionality as the operational history 602. Accordingly, the training operational history 904(1) can indicate or represent a first runtime log and a first GUI interaction log of any chromatograph-equipped mass spectrometer, and the training operational history 904(q) can indicate or represent a q-th runtime log and a q-th GUI interaction log of any other chromatograph-equipped mass spectrometer.

In various aspects, the training dataset 902 can comprise a set of training task metadata 906. In various instances, the set of training task metadata 906 can respectively correspond to the set of training operational histories 904. Thus, since the set of training operational histories 904 can comprise q histories, the set of training task metadata 906 can comprise q metadata indicators: a training task metadata 906(1) to a training task metadata 906(g). In various cases, each of the set of training task metadata 906 can be whatever task metadata (e.g., electronic data having same format, size, or dimensionality as 604) that is known or deemed to correspond to a respective one of the set of training operational histories 904. For example, the training task metadata 906(1) can indicate or represent a first task priority level and a first task duration corresponding to any maintenance task that is performable on whatever chromatograph-equipped mass spectrometer corresponds to the training operational history 904(1). Likewise, the training task metadata 906(q) can indicate or represent a q-th task priority level and a q-th task duration corresponding to any maintenance task that is performable on whatever chromatograph-equipped mass spectrometer corresponds to the training operational history 904(q).

In various aspects, the training dataset 902 can comprise a set of ground-truth annotations 908. In various instances, the set of ground-truth annotations 908 can respectively correspond to the set of training operational histories 904 and to the set of training task metadata 906. Thus, the set of ground-truth annotations 908 can comprise *q* annotations: a ground-truth annotation 908(1) to a ground-truth annotation 908(g). In various cases, each of the set of ground-truth annotations 908 can indicate a future time or date (or a plurality thereof) that is known or deemed to be correct or accurate for a respective history-metadata pair formed by the set of training operational histories 904 and by the set of training task metadata 906. For example, the ground-truth annotation 908(1) can represent a future time or date that is known or deemed to be convenient, appropriate, or otherwise suitable for performing whatever maintenance task corresponds to the training task metadata 906(1) on whatever chromatograph-equipped mass spectrometer corresponds to the training operational history 904(1). As another example, the ground-truth annotation 908(q) can represent a future time or date that is known or deemed to be convenient, appropriate, or otherwise suitable for performing whatever maintenance task corresponds to the training task metadata 906(q) on whatever chromatograph-equipped mass spectrometer corresponds to the training operational history 904(q).

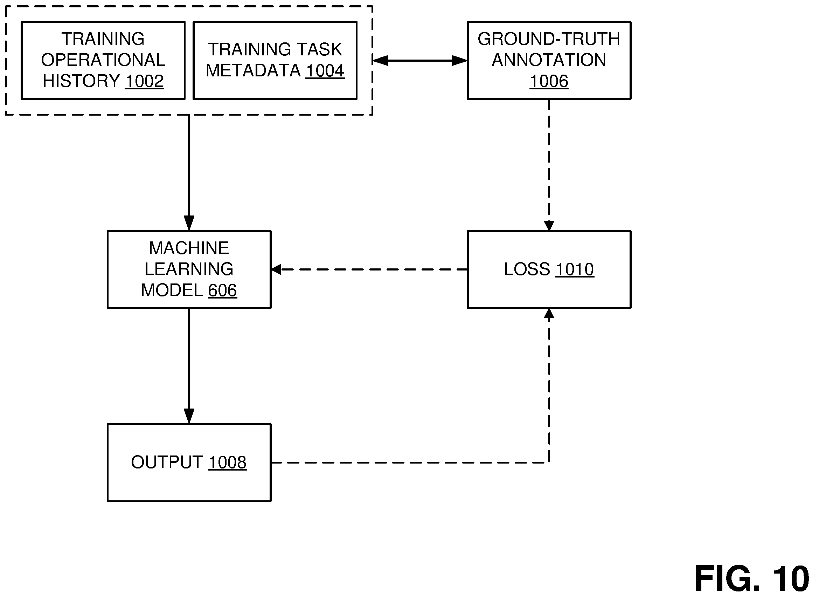

Now, consider FIG. 10. FIG. 10 illustrates an example, non-limiting block diagram showing how the machine learning model 606 can be trained in accordance with one or more embodiments described herein.

In various embodiments, prior to beginning training, whatever trainable internal parameters (e.g., weight matrices, bias values, convolutional kernels) that the machine learning model 606 has can be initialized in any suitable fashion (e.g., random initialization).

In various aspects, any training operational history, corresponding training task metadata, and corresponding ground-truth annotation can be selected from the training dataset 902. These can be respectively referred to as a training operational history 1002, training task metadata 1004, and a ground-truth annotation 1006.

In various instances, the machine learning model 606 can be executed on the training operational history 1002 and on the training task metadata 1004. In various cases, this can cause the machine learning model 606 to produce an output 1008. More specifically, the training operational history 1002 and the training task metadata 1004 can be concatenated together (along with any supplemental data, as the case may be). In various aspects, such concatenation can be fed to the input layer of the machine learning model 606, such concatenation can complete a forward pass through the one or more hidden layers of the machine learning model 606, and the output layer of the machine learning model 606 can compute or calculate the output 1008 based on activation maps or feature maps produced by the one or more hidden layers.

Note that, in various cases, the format, size, or dimensionality of the output 1008 can be controlled or otherwise determined by the number, arrangement, or sizes of neurons or other internal parameters (e.g., convolutional kernels) that are contained in or that otherwise make up the output layer (or any other suitable layer) of the machine learning model 606. Thus, the output 1008 can be forced to have any desired format, size, or dimensionality by adding, removing, or otherwise adjusting neurons or other internal parameters to, from, or within the output layer (or any other layers) of the machine learning model 606.

In any case, the output 1008 can be considered as being an inferred or predicted future time or date that the machine learning model 606 believes would be suitable, appropriate, or convenient for performing whatever maintenance task is represented by the training task metadata 1004 on whatever chromatograph-equipped mass spectrometer is represented by the training operational history 1002. In contrast, the ground-truth annotation 1006 can be considered as the correct or accurate future time or date that is known or deemed to be suitable, appropriate, or convenient for performing whatever maintenance task is represented by the training task metadata 1004 on whatever chromatograph-equipped mass spectrometer is represented by the training operational history 1002. Note that, if the machine learning model 606 has so far undergone no or little training, then the output 1008 can be highly inaccurate (e.g., the output 1008 can be very different from the ground-truth annotation 1006).

In various aspects, a loss 1010 can be computed between the ground-truth annotation 1006 and the output 1008. In various instances, the loss 1010 can be equal to or otherwise based on any suitable loss, error, or objective function (e.g., mean absolute error, mean squared error, cross-entropy error). In various cases, the trainable internal parameters of the machine learning model 606 can be incrementally updated, by performing backpropagation (e.g., stochastic gradient descent) driven by the loss 1010.

In various cases, the above-described training procedure can be repeated for any suitable number of training operational histories and training task metadata (e.g., for all of the training operational histories and training task metadata in the training dataset 902). This can ultimately cause the trainable internal parameters of the machine learning model 606 to become iteratively optimized for accurately predicting future maintenance times/dates based on inputted operational histories and inputted task metadata. In various aspects, any suitable training batch sizes or any suitable training termination criterion can be implemented in such training.

Although the herein disclosure has mainly described how the machine learning model 606 can be trained in a supervised fashion, this is a mere non-limiting example. In various other embodiments, the machine learning model 606 can instead be trained in any other suitable fashion (e.g., via unsupervised learning, via reinforcement learning).

In any case, the scheduling component 316 can generate or predict the time/date 608 at which performance of the maintenance task 404 on the chromatograph-equipped mass spectrometer 304 would be appropriate or convenient. Accordingly, the scheduling component 316 can, in various aspects, electronically schedule the maintenance task 404 to be performed on the chromatograph-equipped mass spectrometer 304 at the time/date 608. In some instances, such scheduling can involve electronically editing or updating any suitable electronic calendar associated with the chromatograph-equipped mass spectrometer 304 or associated with a user or technician. In other instances, such scheduling can involve electronically rendering (e.g., on the GUI) any suitable notification or message that indicates that the maintenance task 404 is to be performed at the time/date 608. In some cases, the scheduling component 316 can repeatedly render such notification or message as the time/date 608 approaches or gets nearer, so as to continually remind a user or technician that the maintenance task 404 is scheduled for the time/date 608.

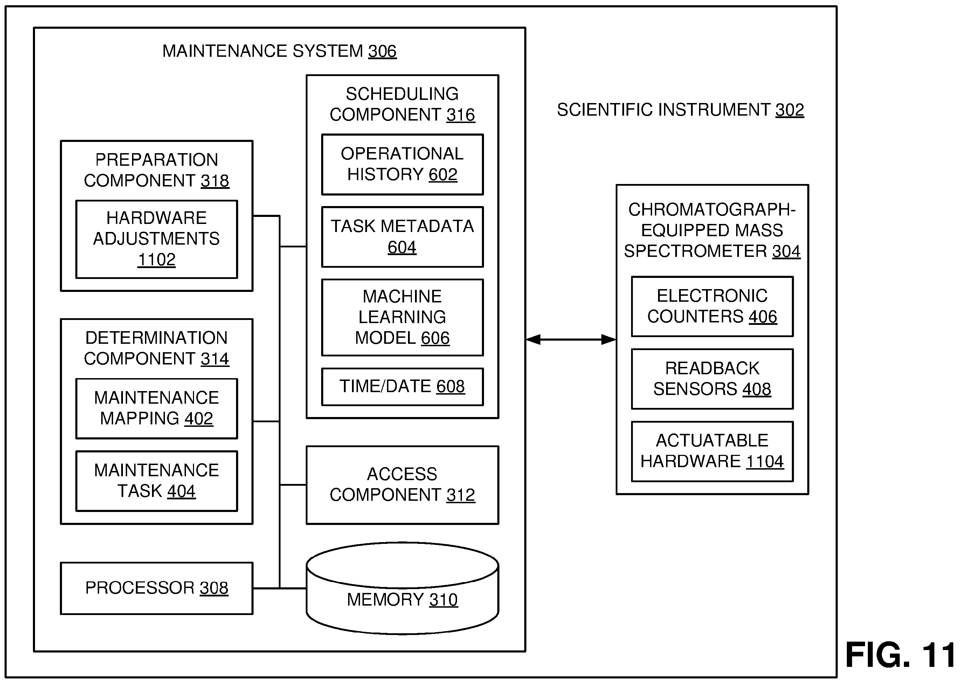

FIG. 11 illustrates a block diagram of an example, non-limiting scientific instrument including hardware adjustments that can facilitate intelligent maintenance in accordance with one or more embodiments described herein.

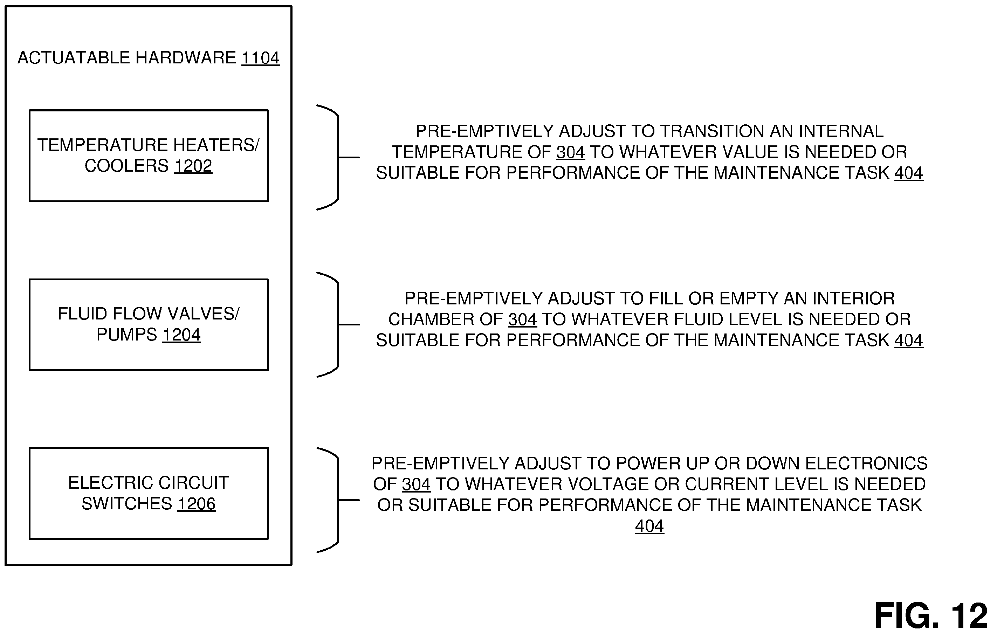

In various embodiments, the preparation component 318 can, prior to the time/date 608, electronically perform or execute one or more hardware adjustments 1102 on the chromatograph-equipped mass spectrometer 304, in preparation for the maintenance task 404. More specifically, the chromatograph-equipped mass spectrometer 304 can comprise actuatable hardware 1104. The actuatable hardware 1104 can be any suitable piece or pieces of constituent hardware that make up the chromatograph-equipped mass spectrometer 304 and that can be electronically actuated, electronically activated, electronically deactivated, or otherwise controllably adjusted by one or more electronic control signals. In various aspects, the one or more hardware adjustments 1102 can be any suitable controlled actuations of the actuatable hardware 1104 that would ready or otherwise prepare the chromatograph-equipped mass spectrometer 304 for the maintenance task 404. Non-limiting aspects are described with respect to FIG. 12.

FIG. 12 illustrates an example, non-limiting block diagram showing how the one or more hardware adjustments 1102 can be carried out in preparation for the maintenance task 404 in accordance with one or more embodiments described herein.

In various aspects, as shown, the actuatable hardware 1104 can comprise one or more temperature heaters or coolers 1202 of the chromatograph-equipped mass spectrometer 304. In various instances, the one or more temperature heaters/coolers 1202 can be any suitable devices that can controllably increase (e.g., heat) or controllably decrease (e.g., cool) one or more internal temperatures of the chromatograph-equipped mass spectrometer 304. As a non-limiting example, an oven of the chromatograph-equipped mass spectrometer 304 can be considered as belonging to the one or more temperature heaters/coolers 1202, since the oven can controllably heat a column of the chromatograph-equipped mass spectrometer 304. As another non-limiting example, a heater of an ion beam emitter of the chromatograph-equipped mass spectrometer 304 can be considered as belonging to the one or more temperature heaters/coolers 1202, since such heater can controllably heat the ion beam emitter.

In various cases, the one or more hardware adjustments 1102 can include, in response to determining that less than any suitable threshold amount of time remains prior to occurrence of the time/date 608, adjusting the one or more temperature heaters/coolers 1202, thereby controllably increasing or controllably decreasing one or more interior temperatures of the chromatograph-equipped mass spectrometer 304. In various aspects, such controlled increase or decrease in temperature can be considered as placing the chromatograph-equipped mass spectrometer 304 into an operational state or operational mode that is amenable to or otherwise appropriate for the maintenance task 404. For instance, suppose that the maintenance task 404 can be performed on the chromatograph-equipped mass spectrometer 304 only when an interior temperature of the chromatograph-equipped mass spectrometer 304 is at some particular value (e.g., is at a room-temperature value, is at some non-room temperature value). In such case, the one or more hardware adjustments 1102 can include controllably heating or cooling the chromatograph-equipped mass spectrometer 304 to that particular value (e.g., causing an interior temperature of the chromatograph-equipped mass spectrometer 304 to transition from an operating value to the particular value; causing an interior temperature of the chromatograph-equipped mass spectrometer 304 to transition from an idling value to the particular value). Accordingly, in various instances, the one or more hardware adjustments 1102 can be considered as pre-emptively adjusting the one or more temperature heaters/coolers 1202, so as to cause an internal temperature of the chromatograph-equipped mass spectrometer 304 to achieve whatever value is needed or suitable for performance of the maintenance task 404.

In various aspects, as shown, the actuatable hardware 1104 can comprise one or more fluid flow valves or pumps 1204 of the chromatograph-equipped mass spectrometer 304. In various instances, the one or more fluid flow valves/pumps 1204 can be any suitable devices that can controllably increase or controllably decrease one or more fluid flow rates within the chromatograph-equipped mass spectrometer 304 or that fill or empty one or more fluid chambers within the chromatograph-equipped mass spectrometer 304. As a non-limiting example, any valves, pumps, tanks, or vents that can store or guide a carrier fluid or calibrant of the chromatograph-equipped mass spectrometer 304 can be considered as belonging to the one or more fluid flow valves/pumps 1204. As another non-limiting example, any vacuum pumps, vacuum chambers, or vacuum vents of the chromatograph-equipped mass spectrometer 304 can be considered as belonging to the one or more fluid flow valves/pumps 1204.

In various cases, the one or more hardware adjustments 1102 can include, in response to determining that less than any suitable threshold amount of time remains prior to occurrence of the time/date 608, adjusting the one or more fluid flow valves/pumps 1204, thereby controllably increasing or controllably decreasing one or more interior fluid flow rates or one or more interior fluid levels of the chromatograph-equipped mass spectrometer 304. In various aspects, such controlled increase or decrease in fluid flow rate or fluid level can be considered as placing the chromatograph-equipped mass spectrometer 304 into an operational state or operational mode that is amenable to or otherwise appropriate for the maintenance task 404. For instance, suppose that the maintenance task 404 can be performed on the chromatograph-equipped mass spectrometer 304 only when an interior fluid flow rate or fluid level of the chromatograph-equipped mass spectrometer 304 is at some particular value (e.g., is at a maximum value, is at a minimum value, is at some intermediate value, or is closed or turned off completely). In such case, the one or more hardware adjustments 1102 can include controllably pumping or throttling the interior fluid flow rate or fluid level of the chromatograph-equipped mass spectrometer 304 to that particular value. Accordingly, the one or more hardware adjustments 1102 can be considered as pre-emptively adjusting the one or more fluid flow valves/pumps 1204, so as to cause an internal fluid flow rate or fluid level of the chromatograph-equipped mass spectrometer 304 to take on whatever value is needed or suitable for performance of the maintenance task 404.

In various aspects, as shown, the actuatable hardware 1104 can comprise one or more electric circuit switches 1206 of the chromatograph-equipped mass spectrometer 304. In various instances, the one or more electric circuit switches 1206 can be any suitable devices that can controllably increase or controllably decrease one or more voltage levels or electric current levels within the chromatograph-equipped mass spectrometer 304. As a non-limiting example, a transistor switch that controls how much voltage or electric current flows to an ion focusing lens of the chromatograph-equipped mass spectrometer 304 can be considered as belonging to the one or more electric circuit switches 1206. As another non-limiting example, a transistor switch that controls how much voltage or electric current flows to an electron multiplier of the chromatograph-equipped mass spectrometer 304 can be considered as belonging to the one or more electric circuit switches 1206.

In various cases, the one or more hardware adjustments 1102 can include, in response to determining that less than any suitable threshold amount of time remains prior to occurrence of the time/date 608, adjusting the one or more electric circuit switches 1206, thereby controllably increasing or controllably decreasing one or more interior voltage or electric current levels of the chromatograph-equipped mass spectrometer 304. In various aspects, such controlled increase or decrease in voltage or electric current can be considered as placing the chromatograph-equipped mass spectrometer 304 into an operational state or operational mode that is amenable to or otherwise appropriate for the maintenance task 404. For instance, suppose that the maintenance task 404 can be performed on the chromatograph-equipped mass spectrometer 304 only when a given voltage or electric current level of the chromatograph-equipped mass spectrometer 304 is zero. In such case, the one or more hardware adjustments 1102 can include controllably opening an appropriate electric circuit switch of the chromatograph-equipped mass spectrometer 304, so as to cause that given voltage or electric current level to drop to zero. Accordingly, the one or more hardware adjustments 1102 can be considered as pre-emptively adjusting the one or more electric circuit switches 1206, so as to cause a voltage or electric current of the chromatograph-equipped mass spectrometer 304 to take on whatever value is needed or suitable for performance of the maintenance task 404.

In this way, the preparation component 318 can, when less than any suitable threshold amount of time remains until the time/date 608, prepare or ready the chromatograph-equipped mass spectrometer 304, by executing the one or more hardware adjustments 1102. Note that, in various aspects, the threshold amount of time that triggers the one or more hardware adjustments 1102 can depend upon the maintenance task 404 (e.g., different maintenance tasks might have different preparatory steps which can consume different amounts of time). In any case, the preparation component 318 can be considered as automatically causing the chromatograph-equipped mass spectrometer 304 to be ready or prepared for performance of the maintenance task 404. This can help to save time and effort for whichever user or technician performs the maintenance task 404.

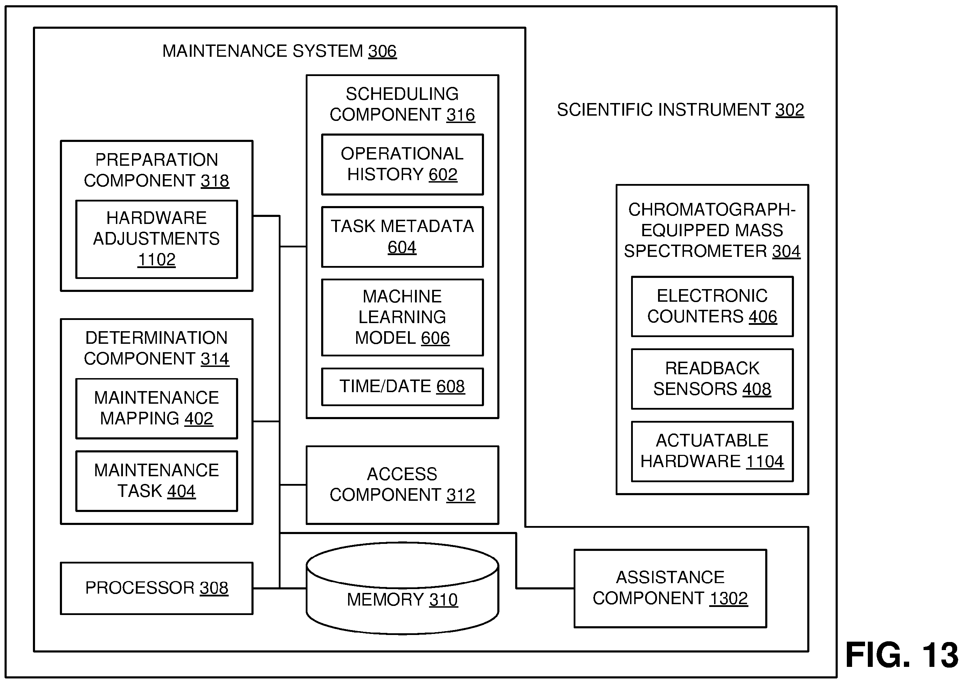

FIG. 13 illustrates a block diagram of an example, non-limiting scientific instrument including an assistance component that can facilitate intelligent maintenance in accordance with one or more embodiments described herein.

In various embodiments, the maintenance system 306 can comprise an assistance component 1302. In various aspects, the assistance component 1302 can electronically assist a user or technician during performance of the maintenance task 404. As a non-limiting example, the assistance component 1302 can, at the time/date 608, visually render (e.g., on the GUI) any suitable instructions (e.g., a videographic tutorial) that can explain how to properly perform the maintenance task 404 on the chromatograph-equipped mass spectrometer 304. Accordingly, the user or technician can watch or read the instructions as they are performing the maintenance task 404. This can help to cause the maintenance task 404 to be properly or correctly performed.

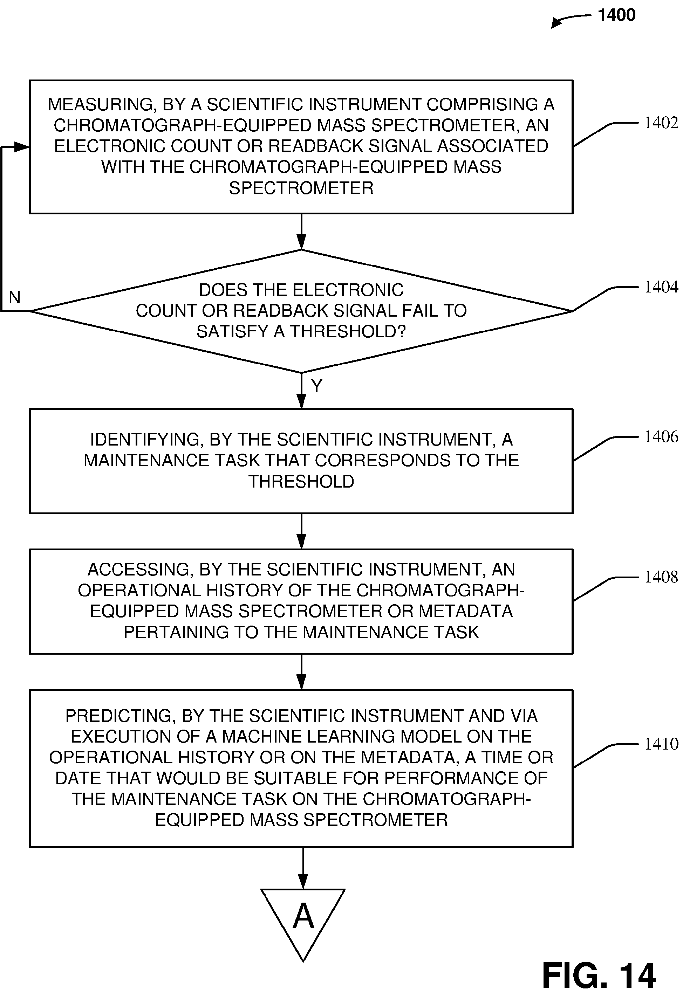

FIGs. 14-16 illustrate flow diagrams of an example, non-limiting computer-implemented method 1400 that can facilitate intelligent maintenance in accordance with one or more embodiments described herein. In various cases, the maintenance system 306 can facilitate the computer-implemented method 1400.

First, consider FIG. 14. In various embodiments, act 1402 can include measuring, by a scientific instrument (e.g., via 314 installed on 302) comprising a chromatograph-equipped mass spectrometer (e.g., 304), an electronic count (e.g., via 406) or a readback signal (e.g., via 408) associated with the chromatograph-equipped mass spectrometer.

In various aspects, act 1404 can include determining, by the scientific instrument (e.g., via 314 installed on 302), whether the electronic count or the readback signal fail to satisfy a threshold (e.g., any of 502). If not (e.g., if the threshold is not unsatisfied), then the computer-implemented method 1400 can proceed back to act 1402. If so (e.g., if the threshold is unsatisfied), then the computer-implemented method 1400 can proceed to act 1406.

In various instances, act 1406 can include identifying, by the scientific instrument (e.g., via 314 installed on 302), a maintenance task (e.g., 404) that corresponds to the threshold.

In various cases, act 1408 can include accessing, by the scientific instrument (e.g., via 316 installed on 302), an operational history (e.g., 602) of the chromatograph-equipped mass spectrometer or metadata (e.g., 604) pertaining to the maintenance task.

In various aspects, act 1410 can include predicting, by the scientific instrument (e.g., via 316 installed on 302) and via execution of a machine learning model (e.g., 606) on the operational history or on the metadata, a time or date (e.g., 608) that would be suitable for performance of the maintenance task on the chromatograph-equipped mass spectrometer.

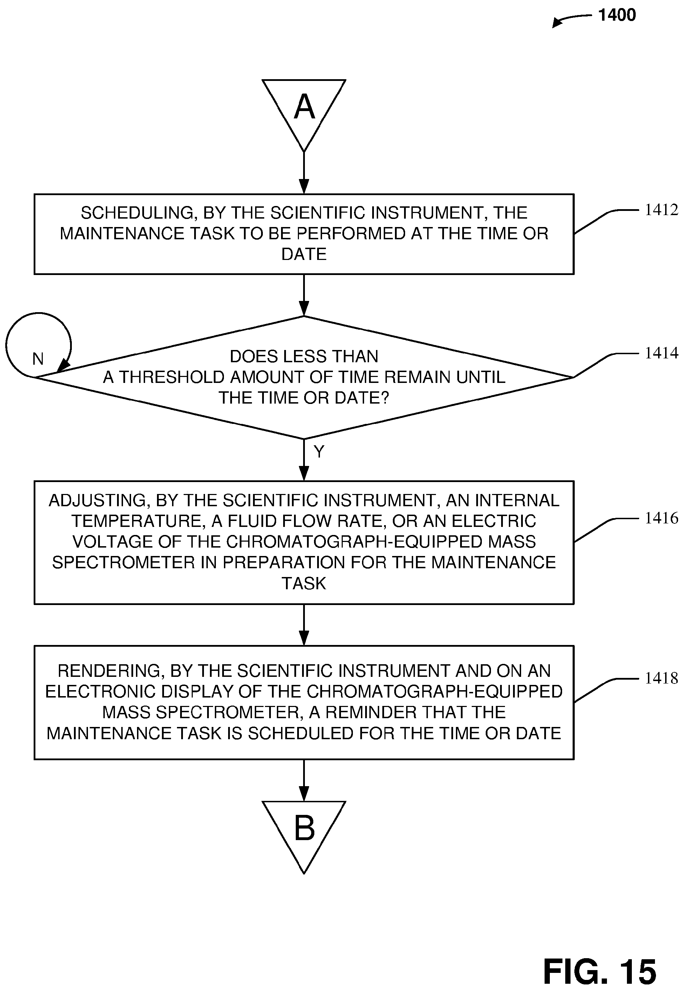

Now, consider FIG. 15. In various aspects, act 1412 can include scheduling, by the scientific instrument (e.g., via 316 installed on 302), the maintenance task to be performed at the time or date.

In various instances, act 1414 can include determining, by the scientific instrument (e.g., via 318 installed on 302), whether less than a threshold amount of time remains until the time or date occurs. If not (e.g., if more than the threshold amount of time remains before the time or date occurs), the computer-implemented method 1400 can proceed back to act 1414. If so (e.g., if less than the threshold amount of time remains before the time or date occurs), the computer-implemented method 1400 can proceed back to act 1416.

In various cases, act 1416 can include adjusting, by the scientific instrument (e.g., via 318 installed on 302), an internal temperature (e.g., via 1202), a fluid flow rate (e.g., via 1204), or an electric voltage (e.g., via 1206) of the chromatograph-equipped mass spectrometer in preparation for the maintenance task.

In various aspects, act 1418 can include rendering, by the scientific instrument (e.g., via 316 installed on 302) and on an electronic display of the chromatograph-equipped mass spectrometer, a reminder that the maintenance task is scheduled for the time or date.

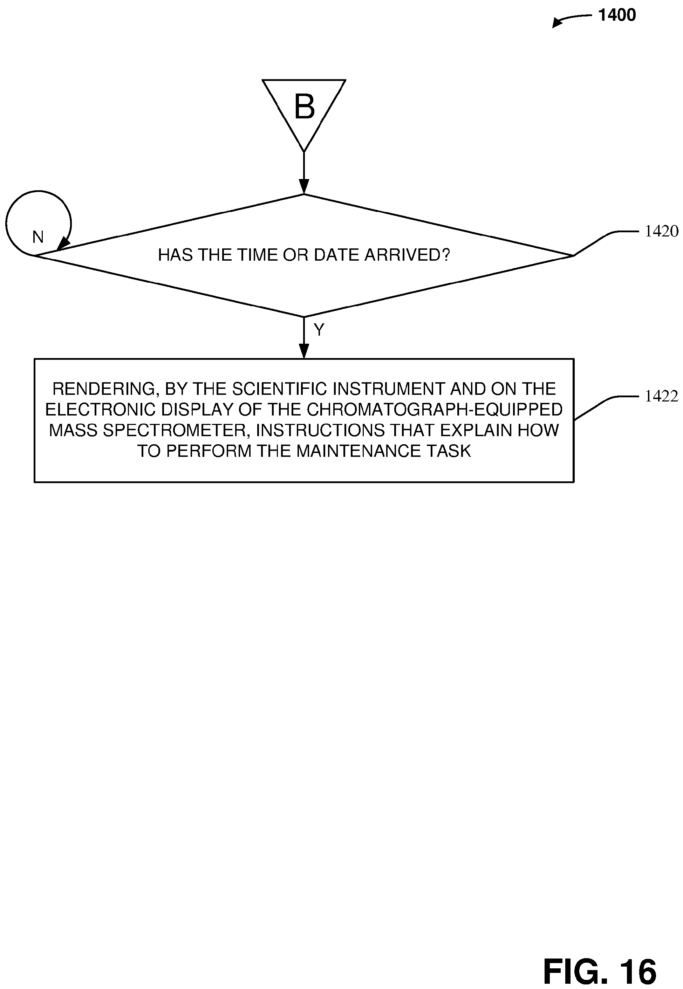

Now, consider FIG. 16. In various instances, act 1420 can include determining, by the scientific instrument (e.g., via 1302 installed on 302), whether the time or date has arrived. If not, the computer-implemented method 1400 can proceed back to act 1420. If so, the computer-implemented method 1400 can instead proceed to act 1422.

In various cases, act 1422 can include rendering, by the scientific instrument (e.g., via 1302 installed on 302) and on the electronic display of the chromatograph-equipped mass spectrometer, instructions that explain how to perform the maintenance task.

The scientific instrument systems, methods, or techniques disclosed herein may include interactions with a human user (e.g., via a user local computing device 1920 discussed herein with reference to FIG. 19). These interactions may include providing information to the user (e.g., information regarding the operation of a scientific instrument such as the scientific instrument 1910 of FIG. 19, information regarding a sample being analyzed or other test or measurement performed by a scientific instrument, information retrieved from a local or remote database, or other information) or providing an option for a user to input commands (e.g., to control the operation of a scientific instrument such as the scientific instrument 1910 of FIG. 19, or to control the analysis of data generated by a scientific instrument), queries (e.g., to a local or remote database), or other information. In some embodiments, these interactions may be performed through a graphical user interface (GUI) that includes a visual display on a display device (e.g., a display device 1810 discussed herein with reference to FIG. 18) that provides outputs to the user and/or prompts the user to provide inputs (e.g., via one or more input devices, such as a keyboard, mouse, trackpad, or touchscreen, included in other I/O devices 1812 discussed herein with reference to FIG. 18). The scientific instrument systems, methods, or techniques disclosed herein may include any suitable GUIs for interaction with a user.

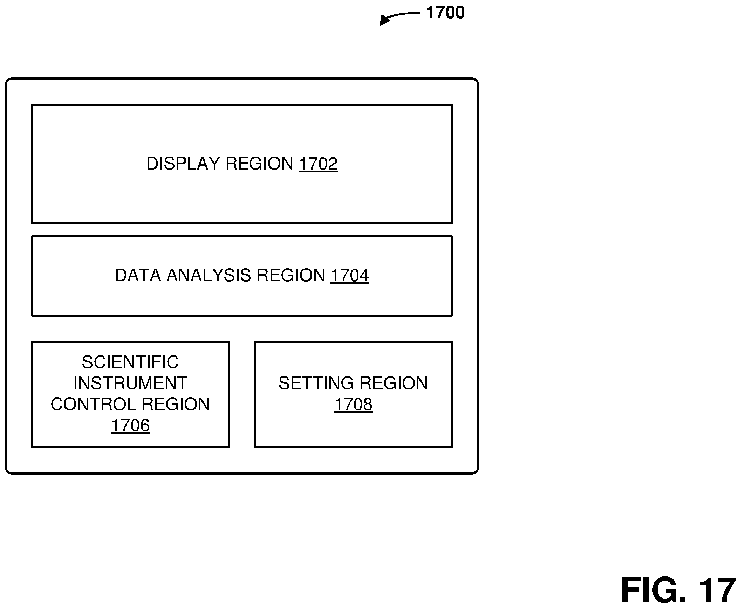

FIG. 17 depicts an example graphical user interface 1700 (hereafter "GUI 1700") that can be used in the performance of some or all of the support methods or techniques disclosed herein, in accordance with various embodiments. In various aspects, the GUI 1700 can be provided on any suitable electronic display (e.g., a display device 1810 discussed herein with reference to FIG. 18) of a computing device (e.g., a computing device 1800 discussed herein with reference to FIG. 18) of a scientific instrument support system (e.g., a scientific instrument support system 1900 discussed herein with reference to FIG. 19), and a user or technician can interact with the GUI 1700 using any suitable input device (e.g., any of other I/O devices 1812 discussed herein with reference to FIG. 18) and input technique (e.g., movement of a cursor, motion capture, facial recognition, gesture detection, voice recognition, actuation of buttons).

The GUI 1700 can include a data display region 1702, a data analysis region 1704, a scientific instrument control region 1706, and a setting region 1708. The particular number and arrangement of regions depicted in FIG. 17 is merely illustrative, and any number and arrangement of regions, including any desired features, can be included in other embodiments of the GUI 1700.

The data display region 1702 can display data generated by a scientific instrument (e.g., a scientific instrument 1910 discussed herein with reference to FIG. 19). For example, the data display region 1702 can display any data measured by the one or more electronic counters 406 or by the one or more readback sensors 408.

The data analysis region 1704 can display any suitable data analysis results (e.g., the results of analyzing the data illustrated in the data display region 1702 or other data). For example, the data analysis region 1704 can display any electronic notifications that are generated by the scheduling component 316 or by the assistance component 1302. In some embodiments, the data display region 1702 and the data analysis region 1704 can be combined in the GUI 1700 (e.g., to include both data output from a scientific instrument and some analysis of the data in a common graph or region).

The scientific instrument control region 1706 can include options that allow a user or technician to control a scientific instrument (e.g., the scientific instrument 1910 discussed herein with reference to FIG. 19). For example, the scientific instrument control region 1706 can include configurable parameters that govern operation of such scientific instrument (e.g., configurable parameters that govern voltages or electric currents of the scientific instrument, that govern interior temperatures of the scientific instrument, or that govern fluid flow rates of the scientific instrument).

The setting region 1708 can include options that allow a user or technician to control any features or functions of the GUI 1700 (or of other GUIs) or to perform common computing operations with respect to the data display region 1702 and the data analysis region 1704 (e.g., saving data on a storage device, such as the storage device 1804 discussed herein with reference to FIG. 18, sending data to another user, labeling data).

As noted above, the scientific instrument module 102 can be implemented by one or more computing devices. FIG. 18 is a block diagram of a computing device 1800 that can perform some or all of the scientific instrument methods or techniques disclosed herein, in accordance with various embodiments. In some embodiments, the scientific instrument module 102 can be implemented by a single instance of the computing device 1800 or by multiple instances of the computing device 1800. Further, as discussed below, the computing device 1800 (or multiple instances thereof) that implements the scientific instrument module 102 can be part of one or more of a scientific instrument 1910, a user local computing device 1920, a service local computing device 1930, or a remote computing device 1940 of FIG. 19.

The computing device 1800 is illustrated as having a number of components, but any one or more of these components can be omitted or duplicated, as suitable for the application and setting. In some embodiments, some or all of the components included in the computing device 1800 can be attached to one or more motherboards and enclosed in a housing (e.g., including plastic, metal, or other materials). In some embodiments, some these components can be fabricated onto a single system-on-a-chip (SoC) (e.g., an SoC may include one or more instances of a processing device 1802 and one or more instances of a storage device 1804). Additionally, in various embodiments, the computing device 1800 can omit one or more of the components illustrated in FIG. 18, but can include interface circuitry (not shown) for coupling to the one or more omitted components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface). For example, the computing device 1800 can omit a display device 1810, but can include display device interface circuitry (e.g., a connector and driver circuitry) to which a display device 1810 can be coupled.

The computing device 1800 can include a processing device 1802 (e.g., one or more processing devices). As used herein, the term "processing device" can refer to any device or portion of a device that processes electronic data from registers or memory to transform that electronic data into other electronic data that may be stored in registers or memories. The processing device 1802 can include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 1800 can include a storage device 1804 (e.g., one or more storage devices). The storage device 1804 can include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device 1804 can include memory that shares a die with a processing device 1802. In such an embodiment, the memory may be used as cache memory and may include embedded dynamic random access memory (eDRAM) or spin transfer torque magnetic random access memory (STT-MRAM), for example. In some embodiments, the storage device 1804 can include non-transitory computer readable media having instructions thereon that, when executed by one or more processing devices (e.g., the processing device 1802), cause the computing device 1800 to perform any appropriate ones of or portions of the methods disclosed herein.

The computing device 1800 can include an interface device 1806 (e.g., one or more instances of the interface device 1806). The interface device 1806 can include one or more communication chips, connectors, or other hardware and software to govern communications between the computing device 1800 and other computing devices. For example, the interface device 1806 can include circuitry for managing wireless communications for the transfer of data to and from the computing device 1800. The term "wireless" and its derivatives may be used to describe circuits, devices, systems, methods, techniques, or communications channels that may communicate data through the use of modulated electromagnetic radiation through a nonsolid medium. The term does not imply that the associated devices do not contain any wires, although in some embodiments they might not. Circuitry included in the interface device 1806 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2")). In some embodiments, circuitry included in the interface device 1806 for managing wireless communications can operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device 1806 for managing wireless communications can operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device 1806 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device 1806 may include one or more antennas (e.g., one or more antenna arrays) to receipt and/or transmission of wireless communications.

In some embodiments, the interface device 1806 can include circuitry for managing wired communications, such as electrical, optical, or any other suitable communication protocols. For example, the interface device 1806 can include circuitry to support communications in accordance with Ethernet technologies. In some embodiments, the interface device 1806 can support both wireless and wired communication, or can support multiple wired communication protocols or multiple wireless communication protocols. For example, a first set of circuitry of the interface device 1806 may be dedicated to shorter-range wireless communications such as Wi-Fi or Bluetooth, and a second set of circuitry of the interface device 1806 may be dedicated to longer-range wireless communications such as global positioning system (GPS), EDGE, GPRS, CDMA, WiMAX, LTE, EV-DO, or others. In some embodiments, a first set of circuitry of the interface device 1806 can be dedicated to wireless communications, and a second set of circuitry of the interface device 1806 can be dedicated to wired communications.

The computing device 1800 can include battery/power circuitry 1808. The battery/power circuitry 1808 can include one or more energy storage devices (e.g., batteries or capacitors) or circuitry for coupling components of the computing device 1800 to an energy source separate from the computing device 1800 (e.g., alternating current line power).

The computing device 1800 can include a display device 1810 (e.g., multiple display devices). The display device 1810 can include any visual indicators, such as a heads-up display, a computer monitor, a projector, a touchscreen display, a liquid crystal display (LCD), a light-emitting diode display, or a flat panel display.

The computing device 1800 can include other input/output (I/O) devices 1812. The other I/O devices 1812 can include one or more audio output devices (e.g., speakers, headsets, earbuds, alarms), one or more audio input devices (e.g., microphones or microphone arrays), location devices (e.g., GPS devices in communication with a satellite-based system to receive a location of the computing device 1800), audio codecs, video codecs, printers, sensors (e.g., thermocouples or other temperature sensors, humidity sensors, pressure sensors, vibration sensors, accelerometers, gyroscopes), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 1800 can have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra mobile personal computer), a desktop computing device, or a server computing device or other networked computing component.

One or more computing devices implementing any of the scientific instrument modules, methods, or techniques disclosed herein may be part of a scientific instrument support system. FIG. 19 is a block diagram of an example scientific instrument support system 1900 in which some or all of the scientific instrument support methods disclosed herein may be performed, in accordance with various embodiments. The scientific instrument modules, methods, or techniques disclosed herein (e.g., the scientific instrument module 102, the computer-implemented method 200, the maintenance system 306, the computer-implemented method 1400) can be implemented by one or more of a scientific instrument 1910, a user local computing device 1920, a service local computing device 1930, or a remote computing device 1940 of the scientific instrument support system 1900.

Any of the scientific instrument 1910, the user local computing device 1920, the service local computing device 1930, or the remote computing device 1940 can include any of the embodiments of the computing device 1800, and any of the scientific instrument 1910, the user local computing device 1920, the service local computing device 1930, or the remote computing device 1940 can take the form of any appropriate ones of the embodiments of the computing device 1800.

The scientific instrument 1910, the user local computing device 1920, the service local computing device 1930, or the remote computing device 1940 may each include a processing device 1902, a storage device 1904, and an interface device 1906. The processing device 1902 may take any suitable form, including any form of the processing device 1802, and the processing devices 1902 included in different ones of the scientific instrument 1910, the user local computing device 1920, the service local computing device 1930, or the remote computing device 1940 may take the same form or different forms. The storage device 1904 may take any suitable form, including any form of the storage device 1804, and the storage devices 1904 included in different ones of the scientific instrument 1910, the user local computing device 1920, the service local computing device 1930, or the remote computing device 1940 may take the same form or different forms. The interface device 1906 may take any suitable form, including any form of the interface device 1806, and the interface devices 1906 included in different ones of the scientific instrument 1910, the user local computing device 1920, the service local computing device 1930, or the remote computing device 1940 may take the same form or different forms.

The scientific instrument 1910, the user local computing device 1920, the service local computing device 1930, and the remote computing device 1940 can be in communication with other elements of the scientific instrument support system 1900 via communication pathways 1908. The communication pathways 1908 may communicatively couple the interface devices 1906 of different ones of the elements of the scientific instrument support system 1900, as shown, and may be wired or wireless communication pathways (e.g., in accordance with any of the communication techniques discussed herein with reference to the interface device 1806). The particular scientific instrument support system 1900 depicted in FIG. 19 includes communication pathways between each pair of the scientific instrument 1910, the user local computing device 1920, the service local computing device 1930, and the remote computing device 1940, but this "fully connected" implementation is merely illustrative, and in various embodiments, various ones of the communication pathways 1908 may be absent. For example, in some embodiments, a service local computing device 1930 can lack a direct communication pathway 1908 between its interface device 1906 and the interface device 1906 of the scientific instrument 1910, but can instead communicate with the scientific instrument 1910 via the communication pathway 1908 between the service local computing device 1930 and the user local computing device 1920 and the communication pathway 1908 between the user local computing device 1920 and the scientific instrument 1910.

The scientific instrument 1910 may include any appropriate scientific instrument, such as the scientific instrument 302.

The user local computing device 1920 can be a computing device (e.g., in accordance with any of the embodiments of the computing device 1800) that is local to a user of the scientific instrument 1910. In some embodiments, the user local computing device 1920 may also be local to the scientific instrument 1910, but this need not be the case; for example, a user local computing device 1920 that is in a user's home or office may be remote from, but in communication with, the scientific instrument 1910 so that the user may use the user local computing device 1920 to control or access data from the scientific instrument 1910. In some embodiments, the user local computing device 1920 may be a laptop, smartphone, or tablet device. In some embodiments the user local computing device 1920 can be a portable computing device.

The service local computing device 1930 can be a computing device (e.g., in accordance with any of the embodiments of the computing device 1800) that is local to an entity that services the scientific instrument 1910. For example, the service local computing device 1930 may be local to a manufacturer of the scientific instrument 1910 or to a third-party service company. In some embodiments, the service local computing device 1930 can communicate with the scientific instrument 1910, the user local computing device 1920, or the remote computing device 1940 (e.g., via a direct communication pathway 1908 or via multiple "indirect" communication pathways 1908, as discussed above) to receive data regarding the operation of the scientific instrument 1910, the user local computing device 1920, or the remote computing device 1940 (e.g., the results of self-tests of the scientific instrument 1910, calibration coefficients used by the scientific instrument 1910, the measurements of sensors associated with the scientific instrument 1910). In some embodiments, the service local computing device 1930 may communicate with the scientific instrument 1910, the user local computing device 1920, or the remote computing device 1940 (e.g., via a direct communication pathway 1908 or via multiple "indirect" communication pathways 1908, as discussed above) to transmit data to the scientific instrument 1910, the user local computing device 1920, or the remote computing device 1940 (e.g., to update programmed instructions, such as firmware, in the scientific instrument 1910, to initiate the performance of test or calibration sequences in the scientific instrument 1910, to update programmed instructions, such as software, in the user local computing device 1920 or the remote computing device 1940). A user of the scientific instrument 1910 can utilize the scientific instrument 1910 or the user local computing device 1920 to communicate with the service local computing device 1930 to report a problem with the scientific instrument 1910 or the user local computing device 1920, to request a visit from a technician to improve the operation of the scientific instrument 1910, to order consumables or replacement parts associated with the scientific instrument 1910, or for other purposes.

The remote computing device 1940 can be a computing device (e.g., in accordance with any of the embodiments of the computing device 1800 discussed herein) that is remote from the scientific instrument 1910 or from the user local computing device 1920. In some embodiments, the remote computing device 1940 can be included in a datacenter or other large-scale server environment. In some embodiments, the remote computing device 1940 may include network-attached storage (e.g., as part of the storage device 1904). The remote computing device 1940 can store data generated by the scientific instrument 1910, perform analyses of the data generated by the scientific instrument 1910 (e.g., in accordance with programmed instructions), facilitate communication between the user local computing device 1920 and the scientific instrument 1910, or facilitate communication between the service local computing device 1930 and the scientific instrument 1910.

In some embodiments, one or more of the elements of the scientific instrument support system 1900 illustrated in FIG. 19 can be omitted. Further, in some embodiments, multiple ones of various ones of the elements of the scientific instrument support system 1900 of FIG. 19 may be present. For example, a scientific instrument support system 1900 can include multiple user local computing devices 1920 (e.g., different user local computing devices 1920 associated with different users or in different locations). In another example, a scientific instrument support system 1900 may include multiple scientific instruments 1910, all in communication with service local computing device 1930 and/or a remote computing device 1940; in such an embodiment, the service local computing device 1930 may monitor these multiple scientific instruments 1910, and the service local computing device 1930 may cause updates or other information may be "broadcast" to multiple scientific instruments 1910 at the same time. Different ones of the scientific instruments 1910 in a scientific instrument support system 1900 can be located close to one another (e.g., in the same room) or farther from one another (e.g., on different floors of a building, in different buildings, in different cities, etc.). In some embodiments, a scientific instrument 1910 can be connected to an Internet-of-Things (IoT) stack that allows for command and control of the scientific instrument 1910 through a web-based application, a virtual or augmented reality application, a mobile application, or a desktop application. Any of these applications can be accessed by a user operating the user local computing device 1920 in communication with the scientific instrument 1910 by the intervening remote computing device 1940. In some embodiments, a scientific instrument 1910 may be sold by the manufacturer along with one or more associated user local computing devices 1920 as part of a local scientific instrument computing unit 1912.

In some embodiments, different ones of the scientific instruments 1910 included in a scientific instrument support system 1900 may be different types of scientific instruments 1910; for example, one scientific instrument 1910 may be a mass spectrometer, while another scientific instrument 1910 may be a chromatograph or autosampler. In some such embodiments, the remote computing device 1940 or the user local computing device 1920 can combine data from different types of scientific instruments 1910 included in a scientific instrument support system 1900.

In various instances, machine learning algorithms or models can be implemented in any suitable way to facilitate any suitable aspects described herein. To facilitate some of the above-described machine learning aspects of various embodiments, consider the following discussion of artificial intelligence (Al). Various embodiments described herein can employ artificial intelligence to facilitate automating one or more features or functionalities. The components can employ various Al-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, *zₙ*), to a confidence that the input belongs to a class, as by f(z) = *confidence*(*class*)*.* Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

In order to provide additional context for various embodiments described herein, FIG. 20 and the following discussion are intended to provide a brief, general description of a suitable computing environment 2000 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 20, the example environment 2000 for implementing various embodiments of the aspects described herein includes a computer 2002, the computer 2002 including a processing unit 2004, a system memory 2006 and a system bus 2008. The system bus 2008 couples system components including, but not limited to, the system memory 2006 to the processing unit 2004. The processing unit 2004 can be any of various commercially available processors. Dual microprocessors and other multi-processor architectures can also be employed as the processing unit 2004.

The system bus 2008 can be any of several types of bus structure that can further interconnect to a memory bus (with or without a memory controller), a peripheral bus, and a local bus using any of a variety of commercially available bus architectures. The system memory 2006 includes ROM 2010 and RAM 2012. A basic input/output system (BIOS) can be stored in a non-volatile memory such as ROM, erasable programmable read only memory (EPROM), EEPROM, which BIOS contains the basic routines that help to transfer information between elements within the computer 2002, such as during startup. The RAM 2012 can also include a high-speed RAM such as static RAM for caching data.

The computer 2002 further includes an internal hard disk drive (HDD) 2014 (e.g., EIDE, SATA), one or more external storage devices 2016 (e.g., a magnetic floppy disk drive (FDD) 2016, a memory stick or flash drive reader, a memory card reader, etc.) and a drive 2020, e.g., such as a solid state drive, an optical disk drive, which can read or write from a disk 2022, such as a CD-ROM disc, a DVD, a BD, etc. Alternatively, where a solid state drive is involved, disk 2022 would not be included, unless separate. While the internal HDD 2014 is illustrated as located within the computer 2002, the internal HDD 2014 can also be configured for external use in a suitable chassis (not shown). Additionally, while not shown in environment 2000, a solid state drive (SSD) could be used in addition to, or in place of, an HDD 2014. The HDD 2014, external storage device(s) 2016 and drive 2020 can be connected to the system bus 2008 by an HDD interface 2024, an external storage interface 2026 and a drive interface 2028, respectively. The interface 2024 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 2002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 2012, including an operating system 2030, one or more application programs 2032, other program modules 2034 and program data 2036. All or portions of the operating system, applications, modules, or data can also be cached in the RAM 2012. The systems and methods described herein can be implemented utilizing various commercially available operating systems or combinations of operating systems.

Computer 2002 can optionally comprise emulation technologies. For example, a hypervisor (not shown) or other intermediary can emulate a hardware environment for operating system 2030, and the emulated hardware can optionally be different from the hardware illustrated in FIG. 20. In such an embodiment, operating system 2030 can comprise one virtual machine (VM) of multiple VMs hosted at computer 2002. Furthermore, operating system 2030 can provide runtime environments, such as the Java runtime environment or the .NET framework, for applications 2032. Runtime environments are consistent execution environments that allow applications 2032 to run on any operating system that includes the runtime environment. Similarly, operating system 2030 can support containers, and applications 2032 can be in the form of containers, which are lightweight, standalone, executable packages of software that include, e.g., code, runtime, system tools, system libraries and settings for an application.

Further, computer 2002 can be enable with a security module, such as a trusted processing module (TPM). For instance with a TPM, boot components hash next in time boot components, and wait for a match of results to secured values, before loading a next boot component. This process can take place at any layer in the code execution stack of computer 2002, e.g., applied at the application execution level or at the operating system (OS) kernel level, thereby enabling security at any level of code execution.

A user can enter commands and information into the computer 2002 through one or more wired/wireless input devices, e.g., a keyboard 2038, a touch screen 2040, and a pointing device, such as a mouse 2042. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 2004 through an input device interface 2044 that can be coupled to the system bus 2008, but can be connected by other interfaces, such as a parallel port, an IEEE 1394 serial port, a game port, a USB port, an IR interface, a BLUETOOTH^{®} interface, etc.

A monitor 2046 or other type of display device can be also connected to the system bus 2008 via an interface, such as a video adapter 2048. In addition to the monitor 2046, a computer typically includes other peripheral output devices (not shown), such as speakers, printers, etc.

The computer 2002 can operate in a networked environment using logical connections via wired or wireless communications to one or more remote computers, such as a remote computer(s) 2050. The remote computer(s) 2050 can be a workstation, a server computer, a router, a personal computer, portable computer, microprocessor-based entertainment appliance, a peer device or other common network node, and typically includes many or all of the elements described relative to the computer 2002, although, for purposes of brevity, only a memory/storage device 2052 is illustrated. The logical connections depicted include wired/wireless connectivity to a local area network (LAN) 2054 or larger networks, e.g., a wide area network (WAN) 2056. Such LAN and WAN networking environments are commonplace in offices and companies, and facilitate enterprise-wide computer networks, such as intranets, all of which can connect to a global communications network, e.g., the Internet.

When used in a LAN networking environment, the computer 2002 can be connected to the local network 2054 through a wired or wireless communication network interface or adapter 2058. The adapter 2058 can facilitate wired or wireless communication to the LAN 2054, which can also include a wireless access point (AP) disposed thereon for communicating with the adapter 2058 in a wireless mode.

When used in a WAN networking environment, the computer 2002 can include a modem 2060 or can be connected to a communications server on the WAN 2056 via other means for establishing communications over the WAN 2056, such as by way of the Internet. The modem 2060, which can be internal or external and a wired or wireless device, can be connected to the system bus 2008 via the input device interface 2044. In a networked environment, program modules depicted relative to the computer 2002 or portions thereof, can be stored in the remote memory/storage device 2052. It will be appreciated that the network connections shown are example and other means of establishing a communications link between the computers can be used.

When used in either a LAN or WAN networking environment, the computer 2002 can access cloud storage systems or other network-based storage systems in addition to, or in place of, external storage devices 2016 as described above, such as but not limited to a network virtual machine providing one or more aspects of storage or processing of information. Generally, a connection between the computer 2002 and a cloud storage system can be established over a LAN 2054 or WAN 2056 e.g., by the adapter 2058 or modem 2060, respectively. Upon connecting the computer 2002 to an associated cloud storage system, the external storage interface 2026 can, with the aid of the adapter 2058 or modem 2060, manage storage provided by the cloud storage system as it would other types of external storage. For instance, the external storage interface 2026 can be configured to provide access to cloud storage sources as if those sources were physically connected to the computer 2002.

The computer 2002 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 21 is a schematic block diagram of a sample computing environment 2100 with which the disclosed subject matter can interact. The sample computing environment 2100 includes one or more client(s) 2110. The client(s) 2110 can be hardware or software (e.g., threads, processes, computing devices). The sample computing environment 2100 also includes one or more server(s) 2130. The server(s) 2130 can also be hardware or software (e.g., threads, processes, computing devices). The servers 2130 can house threads to perform transformations by employing one or more embodiments as described herein, for example. One possible communication between a client 2110 and a server 2130 can be in the form of a data packet adapted to be transmitted between two or more computer processes. The sample computing environment 2100 includes a communication framework 2150 that can be employed to facilitate communications between the client(s) 2110 and the server(s) 2130. The client(s) 2110 are operably connected to one or more client data store(s) 2120 that can be employed to store information local to the client(s) 2110. Similarly, the server(s) 2130 are operably connected to one or more server data store(s) 2140 that can be employed to store information local to the servers 2130.

Various embodiments may be a system, a method, an apparatus or a computer program product at any possible technical detail level of integration. The computer program product can include a computer readable storage medium (or media) having computer readable program instructions thereon for causing a processor to carry out aspects of various embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform various aspects.

Various aspects are described herein with reference to flowchart illustrations or block diagrams of methods, apparatus (systems), and computer program products according to various embodiments. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that various aspects can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects are described in the following examples.

EXAMPLE 1: A scientific instrument can comprise a chromatograph-equipped mass spectrometer and a processor that can execute computer-executable components stored in a non-transitory computer-readable memory. In various aspects, the computer-executable components can comprise a determination component that can determine, based on an electronic counter or readback sensor associated with the chromatograph-equipped mass spectrometer failing to satisfy a threshold, whether performance of a maintenance task on the chromatograph-equipped mass spectrometer is warranted. In various instances, the computer-executable components can comprise a scheduling component that can schedule, in response to a determination that the performance of the maintenance task is warranted, a time or date for the performance of the maintenance task, wherein the time or date can be predicted by a machine learning model based on an operational history of the chromatograph-equipped mass spectrometer.

EXAMPLE 2: The scientific instrument of any preceding example can be implemented, wherein the operational history can comprise previous times or dates during which the chromatograph-equipped mass spectrometer ran samples.

EXAMPLE 3: The scientific instrument of any preceding example can be implemented, wherein the operational history can comprise previous times or dates during which a technician interacted with a graphical user interface of the chromatograph-equipped mass spectrometer.

EXAMPLE 4: The scientific instrument of any preceding example can be implemented, wherein the machine learning model predicts the time or date further based on one or more scheduling preferences of a technician.

EXAMPLE 5: The scientific instrument of any preceding example can be implemented, wherein the machine learning model predicts the time or date further based on a priority level of the maintenance task.

EXAMPLE 6: The scientific instrument of any preceding example can be implemented, wherein the machine learning model can predict the time or date further based on an expected duration of the maintenance task.

EXAMPLE 7: The scientific instrument of any preceding example can be implemented, wherein the machine learning model can receive as input the operational history, wherein the machine learning model can produce as output a plurality of possible times or dates for the performance of the maintenance task, and wherein the scheduling component can receive input from a graphical user interface of the chromatograph-equipped mass spectrometer selecting the time or date from among the plurality of possible times or dates.

EXAMPLE 8: The scientific instrument of any preceding example can be implemented, wherein the computer-executable components can comprise a preparation component that can prepare for the performance of the maintenance task, by adjusting, prior to the time or date, actuatable hardware of the chromatograph-equipped mass spectrometer.

In various embodiments, any combination or combinations of examples 1-8 can be implemented.

EXAMPLE 9: A computer-implemented method can comprise scheduling, by a scientific instrument comprising a chromatograph-equipped mass spectrometer, a time or date for performance of a maintenance task on the chromatograph-equipped mass spectrometer. In various aspects, the computer-implemented method can comprise identifying, by the scientific instrument, a hardware actuator of the chromatograph-equipped mass spectrometer that is associated with the maintenance task. In various instances, the computer-implemented method can comprise adjusting, by the scientific instrument and in response to there being less than a threshold amount of time remaining until the time or date occurs, the hardware actuator in preparation for the maintenance task.

EXAMPLE 10: The computer-implemented method of any preceding example can be implemented, wherein the hardware actuator can be a temperature heater or a temperature cooler of the chromatograph-equipped mass spectrometer.

EXAMPLE 11: The computer-implemented method of any preceding example can be implemented, wherein the adjusting can cause an internal temperature of the chromatograph-equipped mass spectrometer to transition, during the threshold amount of time, from an operating temperature value to a room temperature value.

EXAMPLE 12: The computer-implemented method of any preceding example can be implemented, wherein the adjusting can cause an internal temperature of the chromatograph-equipped mass spectrometer to transition, during the threshold amount of time, from an operating temperature value to a non-room temperature value.

EXAMPLE 13: The computer-implemented method of any preceding example can be implemented, wherein the hardware actuator can be a fluid valve or a fluid pump of the chromatograph-equipped mass spectrometer.

EXAMPLE 14: The computer-implemented method of any preceding example can be implemented, wherein the adjusting can cause a vacuum of the chromatograph-equipped mass spectrometer to be vented during the threshold amount of time.

EXAMPLE 15: The computer-implemented method of any preceding example can be implemented, wherein the hardware actuator can be a circuit switch of the chromatograph-equipped mass spectrometer.

EXAMPLE 16: The computer-implemented method of any preceding example can be implemented, wherein the adjusting can open an electrical circuit of the chromatograph-equipped mass spectrometer during the threshold amount of time.

EXAMPLE 17: The computer-implemented method of any preceding example can be implemented, wherein the threshold amount of time can depend upon the maintenance task.

In various embodiments, any combination or combinations of examples 9-17 can be implemented.

EXAMPLE 18: A computer program product for facilitating intelligent maintenance for scientific instruments can comprise a non-transitory computer-readable memory having program instructions embodied therewith. In various aspects, the program instructions can be executable by a processor to cause the processor to: predict, via execution of a machine learning model on a log of graphical user interface interactions experienced by a mass spectrometer, a time or date for performance of a maintenance task on the mass spectrometer. In various instances, the program instructions can be further executable to cause the processor to prepare, in response to there being less than a threshold amount of time remaining until the time or date occurs, the mass spectrometer for the maintenance task, by altering an interior temperature, a fluid flow rate, or an electric voltage of the mass spectrometer.

EXAMPLE 19: The computer program product of any preceding example can be implemented, wherein the program instructions can be further executable to cause the processor to visually render, on an electronic display of the mass spectrometer and at the time or date, instructions explaining how to perform the maintenance task.

EXAMPLE 20: The computer program product of any preceding example can be implemented, wherein the program instructions can be further executable to cause the processor to visually render, on an electronic display of the mass spectrometer and prior to the time or date, a reminder that the maintenance task will be performed on the time or date.

In various embodiments, any combination or combinations of examples 18-20 can be implemented.

In various embodiments, any combination or combinations of examples 1-20 can be implemented.

## Claims

1. A scientific instrument, comprising:
a chromatograph-equipped mass spectrometer; and
a processor that executes computer-executable components stored in a non-transitory computer-readable memory, wherein the computer-executable components comprise:
a determination component that determines, based on an electronic counter or readback sensor associated with the chromatograph-equipped mass spectrometer failing to satisfy a threshold, whether performance of a maintenance task on the chromatograph-equipped mass spectrometer is warranted; and
a scheduling component that schedules, in response to a determination that the performance of the maintenance task is warranted, a time or date for the performance of the maintenance task, wherein the time or date is predicted by a machine learning model based on an operational history of the chromatograph-equipped mass spectrometer.

2. The scientific instrument of claim 1, wherein the operational history comprises previous times or dates during which the chromatograph-equipped mass spectrometer ran samples.

3. The scientific instrument of claim 1, wherein the operational history comprises previous times or dates during which a technician interacted with a graphical user interface of the chromatograph-equipped mass spectrometer.

4. The scientific instrument of claim 1, wherein the machine learning model predicts the time or date further based on one or more scheduling preferences of a technician.

5. The scientific instrument of claim 1, wherein the machine learning model predicts the time or date further based on a priority level of the maintenance task.

6. The scientific instrument of claim 1, wherein the machine learning model predicts the time or date further based on an expected duration of the maintenance task.

7. The scientific instrument of claim 1, wherein the machine learning model receives as input the operational history, wherein the machine learning model produces as output a plurality of possible times or dates for the performance of the maintenance task, and wherein the scheduling component:
receives input from a graphical user interface of the chromatograph-equipped mass spectrometer selecting the time or date from among the plurality of possible times or dates.

8. The scientific instrument of claim 1, wherein the computer-executable components comprise:
a preparation component that prepares for the performance of the maintenance task, by adjusting, prior to the time or date, actuatable hardware of the chromatograph-equipped mass spectrometer.

9. A computer-implemented method, comprising:
scheduling, by a scientific instrument comprising a chromatograph-equipped mass spectrometer, a time or date for performance of a maintenance task on the chromatograph-equipped mass spectrometer;
identifying, by the scientific instrument, a hardware actuator of the chromatograph-equipped mass spectrometer that is associated with the maintenance task; and
adjusting, by the scientific instrument and in response to there being less than a threshold amount of time remaining until the time or date occurs, the hardware actuator in preparation for the maintenance task.

10. The computer-implemented method of claim 9, wherein the hardware actuator is a temperature heater or a temperature cooler of the chromatograph-equipped mass spectrometer.

11. The computer-implemented method of claim 10, wherein the adjusting causes an internal temperature of the chromatograph-equipped mass spectrometer to transition, during the threshold amount of time, from an operating temperature value to a room temperature value.

12. The computer-implemented method of claim 10, wherein the adjusting causes an internal temperature of the chromatograph-equipped mass spectrometer to transition, during the threshold amount of time, from an operating temperature value to a non-room temperature value.

13. The computer-implemented method of claim 9, wherein the hardware actuator is a fluid valve or a fluid pump of the chromatograph-equipped mass spectrometer.

14. The computer-implemented method of claim 13, wherein the adjusting causes a vacuum of the chromatograph-equipped mass spectrometer to be vented during the threshold amount of time.

15. The computer-implemented method of claim 9, wherein the hardware actuator is a circuit switch of the chromatograph-equipped mass spectrometer.

16. The computer-implemented method of claim 15, wherein the adjusting opens an electrical circuit of the chromatograph-equipped mass spectrometer during the threshold amount of time.

17. The computer-implemented method of claim 9, wherein the threshold amount of time depends upon the maintenance task.
